# EUROPÄISCHE PATENTSCHRIFT

(11) **EP 3 065 389 B1**
(45) Veröffentlichungstag und Bekanntmachung des Hinweises auf die Patenterteilung: **09.09.2020**
(21) Anmeldenummer: 15157972.9
(22) Anmeldetag: 06.03.2015
(51) Int. Cl.: H04N 5/217, H04N 5/76, H04N 5/77

(54) **Verfahren zur Herstellung von Videoaufnahmen**
Method for making video recordings
Procédé de fabrication d'enregistrements vidéos

(43) Veröffentlichungstag der Anmeldung: 07.09.2016
(73) Patentinhaber: Potucek, Florian, 7061 Trausdorf (AT)
(72) Erfinder: Potucek, Florian, 7061 Trausdorf (AT)
(74) Vertreter: Patentanwälte Pinter & Weiss OG

(56) Entgegenhaltungen:
- EP-A1- 2 453 645
- EP-A2- 2 672 695
- US-A1- 2002 120 701
- US-A1- 2013 294 751
- US-B1- 8 774 527

## Beschreibung

Die gegenständliche Erfindung betrifft ein Verfahren zur Herstellung von Videoaufnahmen mit einem mobilen Kameragerät, wobei das Verfahren die folgenden Schritte aufweist: Bereitstellen von Videoschablonen, wobei jede Videoschablone eine Vielzahl an vorgegebenen Szenen aufweist; Benutzerauswahl einer Videoschablone; Anzeigen und gegebenenfalls Bearbeiten von Video- und/oder Szeneninformationen; Empfangen einer Benutzereingabe zum Starten der Aufnahme der vorgegebenen Szene; Aufnahme der aktuell vorgegebenen Szene; Prüfen der aufgenommenen Szene und entweder Wiederholen der Aufnahme der letzten Szene, oder Speichern der letzten Szene und Beginn der Aufnahme der nächsten Szene, bis alle vorgegebenen Szenen fertiggestellt sind; gegebenenfalls Einfügen und/oder Bearbeiten von Videodaten; gegebenenfalls Bearbeiten der Szenen; und Zusammenfügen der aufgenommenen Szenen gemäß der gewählten Videoschablone zu einem Video und Speichern des Videos.

Durch die rasante Entwicklung von mobilen Geräten, wie etwa Smartphones oder Tablet-PCs, stehen verhältnismäßig hochwertige Videoaufnahmegeräte und Kamerafunktionalitäten nun auch einem breiten Publikum zur Verfügung, ohne dass finanzielle Hemmschwellen für die Anschaffung einer eigenen Videoausrüstung überwunden werden müssten. Dies führt dazu, dass die in Smartphones eingebauten Kameras auch von Personen genutzt werden, die keine Vorkenntnisse mit der Erstellung von Videoaufnahmen haben, und die oftmals die neuen Möglichkeiten rein "spielerisch" ausprobieren und erlernen, ohne sich mit komplizierter Hard- und Software beschäftigen zu wollen. Dies führt jedoch auch dazu, dass die aus einem Impuls heraus gemachten Videoaufnahmen oftmals qualitativ unbefriedigend sind. Die aufgenommenen Videos werden meist als Dateien im Speicher des Smartphones gespeichert, manchmal auf sozialen Medienplattformen veröffentlicht, aber danach nicht weiter bearbeitet, und oft auch kaum mehr betrachtet oder genutzt. Es wäre daher wünschenswert, Benutzern auch die Nutzung komplexerer Videofunktionalitäten ohne technische Einstiegshürden zu ermöglichen.

Die US 2013/0294751 A1 vom 7. November 2013 offenbart Verfahren zur Erstellung von Kurzvideos auf mobilen Geräten, wobei die Videos jeweils auf vorgegebenen Templates basieren. Die Templates beinhalten eine Abfolge von zeitlich und thematisch vorgegebenen Videoclips, gegebenenfalls mit einer Auswahl an Übergängen. Weiters besteht die Möglichkeit, Text und Audiodaten zu den Videoclips hinzuzufügen. Die Videoclips werden dann gemäß den Vorgaben des Templates zu einem fertigen Video zusammengefügt.

EP 2453645 A1 offenbart ein Verfahren und eine Vorrichtung zur Aufnahme eines Panoramabildes mithilfe einer Normalformatkamera, die zur Erzeugung des Panoramabildes über den aufzunehmenden Bildbereich geschwenkt wird.

US 2002/0120701 A1 offenbart ein System zur Erstellung elektronischer Mails, in welche Multimediainformationen eingebettet sind. Als Multimediainformationen können auch Computerspielinhalte eingebettet werden.

EP 2672695 A2 offenbart ein Verfahren zum Umschalten zwischen einer vorderen und einer hinteren Kamera eines mobilen Gerätes während einer Videoaufnahme.

Die gegenständliche Erfindung zielt darauf ab, die Möglichkeiten, die die Videoaufnahme-Funktion von mobilen Geräten, insbesondere Smartphones, bieten, auch einem breiten Kreis von Anwendern intuitiv zugänglich zu machen und die Erstellung, Nutzung und Verwaltung von Videos erheblich zu erleichtern. Weiters zielt die Erfindung darauf ab, neue und verbesserte Merkmale und Verwendungsmöglichkeiten für Videos, die auf Basis von Videoschablonen erstellt werden, sowie für die Handhabung der Videoschablonen selbst zu schaffen.

Erfindungsgemäß werden diese und weitere Ziele durch ein Verfahren gemäß dem beigefügten Anspruch 1 erreicht.

In einem Verfahren der eingangs genannten Art kann das mobile Kameragerät Positions- und/oder Bewegungsdaten ermitteln und diese mit der Szene speichern und für die Schritte der Aufnahme und/oder Bearbeitung der Szenen und/oder die weitere Verarbeitung des Videos verwenden. Dies erweitert die Verwendungsmöglichkeiten des mobilen Kameragerätes über die reine Verarbeitung der Bild- und Toninformation, wie sie bei einem Video üblich ist, hinaus. Das Verfahren erlaubt es, dem Benutzer vor und während der Aufnahme mit zusätzlicher Information zu versorgen und Hilfestellungen zu bieten. Zusätzlich eröffnet das Verfahren zahlreiche bisher nicht verfügbare Verwendungsmöglichkeiten.

Als mobiles Kameragerät wird jede digitale Kameraeinrichtung angesehen, die die für die Ausführung des Verfahrens erforderlichen Merkmale aufweist. Insbesondere kann das mobile Kameragerät ein Smartphone, Tablet-PC, oder ähnliches Gerät sein, das vorzugsweise mit einem Touchscreen und mit zumindest einer ersten Kamera und gegebenenfalls einer zweiten Kamera ausgestattet ist.

Die Funktionalitäten, die erfindungsgemäß mit dem mobilen Kameragerät ausgeführt werden können, können beispielsweise von einer Softwareanwendung, wie etwa einer Smartphone-App, bereitgestellt werden, die auf das mobile Kameragerät heruntergeladen und auf diesem App, bereitgestellt werden, die auf das mobile Kameragerät heruntergeladen und auf diesem ausgeführt wird. Die Softwareanwendung kann von einem Anbieter bereitgestellt werden, der auch die Videoschablonen Verwalten und einen Cloudserver für das Speichern fertiger Videos bereitstellen kann oder es kann sich dabei um verschiedene Anbieter handeln. Die Anbieter der Softwareanwendung, der Videoschablonen und des Cloudservers werden im Folgenden allgemein als Produktanbieter bezeichnet.

Als Positionsdaten werden insbesondere die Geopositionsdaten angesehen, die etwa über einen GPS-Empfänger ermittelt werden können. Positionsdaten können jedoch auch auf andere Weise ermittelt werden, etwa durch Auswertung von Funkzellen oder WLAN-Netzen, in denen sich das Gerät gerade befindet, oder auf eine andere bekannte Weise. Zu den Positionsdaten zählt auch die Ausrichtung des mobilen Kamerageräts, also insbesondere die Himmelsrichtung, in die die Kamera ausgerichtet ist, die Neigung um die Kippachse und die Verdrehung um die Objektivachse.

Als Bewegungsdaten werden die Veränderungen der Positionsdaten bezeichnet, die beispielsweise durch Beschleunigungssensoren oder durch Auswertung der Kameraaufnahmen ermittelt werden können.

In vorteilhafter Weise können vor und/oder während der Aufnahme Hinweise und Anzeigen eingeblendet werden, die anhand der Positions- und/oder Bewegungsdaten erstellt werden. Dies erlaubt es etwa, dem Benutzer während der Aufnahme durch Einblendungen anzuzeigen, in welcher Weise er die Kamera zu führen hat, damit sie den Szenenvorgaben der Videoschablone entspricht. Weiters kann ein Fortschritt (z.B. in der Art eines Fortschrittsbalkens) eingeblendet werden, um dem Benutzer zu verdeutlichen, inwieweit er die Vorgabe bereits erfüllt hat.

In einer vorteilhaften Ausführungsform können die gespeicherten Positions- und/oder Bewegungsdaten mit dem Video verfügbar gemacht werden. Dies erlaubt beispielsweise eine Validitätsprüfung durch einen Dritten, der das Video betrachtet. Das kann insbesondere dann vorteilhaft sein, wenn die Videoschablone Videodaten für eine Produktpräsentation und/oder ein Produktinserat umfasst, wobei die gespeicherten Daten vom Betrachter der Produktpräsentation oder des Produktinserates geprüft werden können. In Verbindung mit dem Datum des Videos lässt sich dadurch sicherstellen, dass das Video an einer bestimmten Geoposition aufgenommen wurde.

In vorteilhafter Weise kann das Verfahren einen Schritt zum Upload des Videos zu einem Cloudserver oder einer Internetplattform umfassen. Durch die Videodaten, die dem Video zugeordnet sind, und die im Allgemeinen zusammen mit dem Video in einer gemeinsamen Datei gespeichert sind, lässt sich der Upload besonders einfach bewerkstelligen, und die Internetplattform oder der Cloudserver können anhand der Videodaten und gegebenenfalls anhand der Positionsdaten automatisch ermitteln, wie das Video verarbeitet werden soll. Beispielsweise kann auf der Internetplattform nach dem Upload eine automatische Veröffentlichung des Videos auf Basis der Videodaten und gegebenenfalls der Positions- und/oder Bewegungsdaten erfolgen. Dies lässt sich beispielsweise Vorteilhaft für die automatische Erstellung von Verkaufsinseraten nutzen.

In vorteilhafter Weise kann eine Auswahl der für einen Upload verfügbaren Internetplattformen in Abhängigkeit von der Videoschablone und/oder von den Positionsdaten bereitgestellt werden. Wenn die Videoschablone beispielsweise die Daten für ein Verkaufsinserat enthält, werden nur die Internetplattformen angeboten, die für einen Verkauf oder eine Versteigerung von Produkten vorgesehen sind.

In einer weiteren vorteilhaften Ausführungsform kann das Bearbeiten und/oder das Aufnehmen das Einfügen von animierten und/oder statischen Graphikelementen umfassen. Dadurch kann das Video vom Benutzer individuell angepasst werden, wobei der Produktanbieter zusätzliche Graphikelemente gegen eine Gebühr zur Verfügung stellen kann.

In vorteilhafter Weise können die Graphikelemente auf Basis der Positionsdaten und/oder der Datums-/Zeitdaten der aufgenommenen Szene zur Auswahl bereitgestellt werden. Dem Benutzer können dadurch exklusive Graphikelemente bereitgestellt werden, die nur einem eingeschränkten Personenkreis zur Verfügung stehen, etwa den Besuchern einer bestimmten Sportveranstaltung oder einer bestimmten Urlaubsdestination. So kann beispielsweise das Logo eines Fußballklubs exklusiv für Aufnahmen von Fans, die sich gerade im Stadion befinden, als Graphik, Banner oder Rahmen bereitgestellt werden. Auch spezielle animierte Graphikelement können anlassbezogen bereitgestellt werden, etwa animierte Graphikelemente, die Torszenen oder Fouls kreativ kommentieren.

In einer weiteren Ausführungsform des erfindungsgemäßen Verfahrens kann während und/oder nach der Aufnahme jeder Szene eine Qualitätsprüfung auf Basis von Qualitätskriterien erfolgen. Die Qualitätskriterien können entweder vom Benutzer gewählt oder vom Anbieter der Videoschablone festgelegt werden. Dies stellt eine Basisqualität aller Videos sicher, die mit einer bestimmten Videoschablone erstellt werden. Dadurch kann auch die Qualität des Internetauftritts einer Internetplattform erhöht werden, die ihren Benutzern die Möglichkeit bietet, ihre Videos automatisiert auf dieser Plattform zu veröffentlichen.

In einer vorteilhaften Ausführungsform können die Videodaten eine maximale Nutzungsdauer umfassen, nach deren Ablauf das Video zumindest für Dritte deaktiviert und/oder gelöscht wird. Dies beugt einem späteren Missbrauch von Videos vor und erlaubt dem Benutzer eine bessere Kontrolle über deren zukünftige Verwendung und Verbreitung.

In vorteilhafter Weise kann die Aufnahme einer Szene das Mitschneiden von (Gaming-)Inhalten, die auf dem mobilen Gerät angezeigt werden, umfassen. Dies erlaubt es dem Benutzer, mitgeschnittene Szenen aus einem von ihm gespielten Videospiel zu speichern, und diese nachträglich zu bearbeiten, mit Effekten und Graphikelementen zu versehen und Videos zu erstellen, die mit Freunden geteilt werden können, beispielsweise indem das Video auf einen Cloudserver hochgeladen wird, von dem er gemäß den Einstellungen von einem definierten Freundeskreis betrachtet werden kann. Dabei kann auch eine Push-Funktion für Videos vorgesehen sein, sodass der Empfänger des Videos automatisch auf seinem mobilen Gerät benachrichtigt wird, wenn ein Video für ihn verfügbar ist.

In einer weiteren vorteilhaften Ausführungsform der Erfindung kann eine zusätzliche (zweite oder weitere) Kamera des mobilen Geräts bei der Aufnahme aktivierbar sein, wobei die Aufnahme der zweiten Kamera in Form eines Bild-in-Bild-Modus in die aufgenommene Szene eingeblendet wird. Dadurch lassen sich mehrere Kameras eines mobilen Geräts gleichzeitig nutzen, wobei eine Kamera üblicherweise auf der dem Display abgewandten Seite des Geräts angeordnet ist, und die eigentliche Szene filmt, und eine weitere Kamera auf der Seite des Displays angeordnet ist, und somit in die Gegenrichtung filmt. Durch Hochhalten der Kamera kann dadurch beispielsweise in zwei Blickrichtungen gleichzeitig gefilmt werden. Andererseits kann der Benutzer während des Filmens einer Szene gleichzeitig sich selbst filmen, etwa um die Szene zu kommentieren. Im Fall der Aufnahme eines Videospiels kann ein Video, das den Spieler zeigt, in das Videospiel selbst eingeblendet werden (oder umgekehrt), wobei der Spieler zeitgleich sein Spiel kommentieren kann. Diese Funktionalität lässt sich auch für mobile Geräte nutzen, die mehrere, in unterschiedliche Richtungen ausgerichtete Kameras kombinieren, um etwa 360°-Aufnahmen zu erstellen.

Die Erfindung betrifft weiters ein Verfahren zur Veröffentlichung eines obenstehend beschriebenen Videos in einem Internetportal, wobei das Video von dem mobilen Kameragerät zum Internetportal hochgeladen wird, und wobei die Veröffentlichung auf Basis der Videodaten erfolgt. Da alle Videos, die mit der gleichen Videoschablone erstellt wurden, die selbe Grundstruktur aufweisen, kann das Video von dem Internetportal automatisch ausgewertet werden. Beispielsweise kann auch eine Indexierung des Videos vorgesehen sein, wobei das Internetportal die Möglichkeit bietet, zu einer bestimmten Stelle in dem Video zu springen, etwa um einen bestimmten Teil eines Präsentationsvideos zu sehen (z.B. die Küche bei einer Immobilie, die Innenansicht eines Fahrzeuges, oder eine Beschreibung der bisherigen Arbeitgeber bei einem Bewerbungsvideo).

Weiters betrifft die Erfindung die Verwendung eines obenstehend beschriebenen Videos zur Kommunikation zwischen dem Benutzer des mobilen Kamerageräts und zumindest einem weiteren Benutzer eines weiteren mobilen Kamerageräts. Eine solche Kommunikationsfunktion vereint die Vorteile der SMS-Funktionalität mit den Vorteilen der Videotelefonie. Gleichzeitig können die Videos vor dem Versenden bearbeitet und mit Effekten versehen werden. Gegebenenfalls kann für die Kommunikationsfunktion (oder auch für andere mit dem erfindungsgemäßen Verfahren hergestellte Videos) eine Verschlüsselungsfunktion vorgesehen sein, um einen unzulässigen Zugriff zu vermeiden.

Die gegenständliche Erfindung wird nachfolgend unter Bezugnahme auf die Figuren 1 bis 12 näher erläutert, die beispielhaft, schematisch und nicht einschränkend vorteilhafte Ausgestaltungen der Erfindung zeigen. Dabei zeigt
Fig.1 ein Flussdiagramm mit beispielhaften Schritten, die bei der Aufnahme von Videos durchlaufen werden;
Fig. 2 eine Smartphone-Schirmansicht eines Startbildschirms;
Fig. 3 eine Smartphone-Schirmansicht mit einer Kategorieauswahl;
Fig. 4 eine Smartphone-Schirmansicht mit Video- und Szeneninformationen;
Fig. 5 eine Smartphone-Schirmansicht im Pause-Modus unmittelbar vor dem Starten einer Aufnahme;
Fig. 6 eine Smartphone-Schirmansicht im Aufzeichnungs-Modus während einer Aufnahmesequenz;
Fig. 7 eine Smartphone-Schirmansicht mit einem Eingabedialog für Videodaten;
Fig. 8 eine Smartphone-Schirmansicht mit einer Aufnahmen- bzw. Szenengalerie;
Fig. 9 eine Smartphone-Schirmansicht mit einer Szenenauswahl;
Fig. 10 eine Smartphone-Schirmansicht mit einer Auswahl von Effekten;
Fig. 11 eine Smartphone-Schirmansicht mit einer Auswahl von Videoelementen zum Einfügen;
Fig. 12 eine Smartphone-Schirmansicht, die bei der Erstellung eines Videos angezeigt wird;
Fig. 13 eine Smartphone-Schirmansicht, die nach dem Aufnehmen einer Szene angezeigt wird; und
Fig. 14 eine Smartphone-Schirmansicht mit einem Hauptmenü.

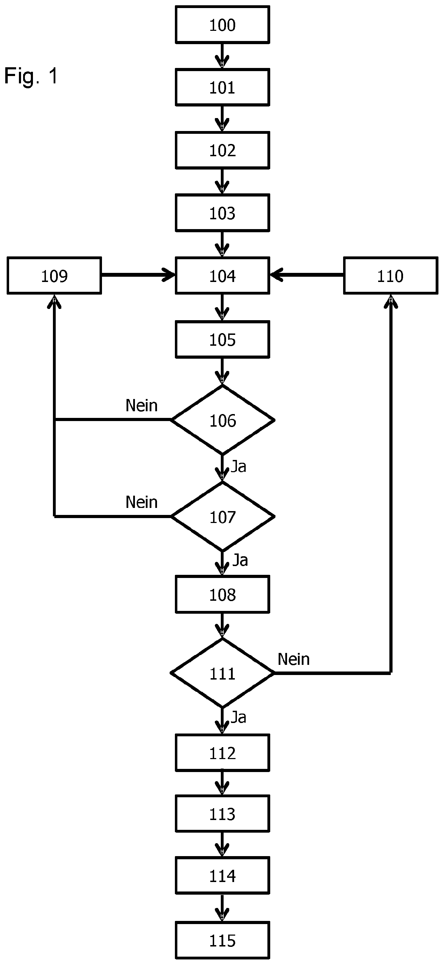

Das erfindungsgemäße Verfahren zur Herstellung von Videoaufnahmen wird nun anhand des in Fig. 1 dargestellten Flussdiagramms beispielhaft erläutert. Nachdem bei 100 die Anwendung auf einem mobilen Kameragerät 1, z.B. einem Smartphone gestartet wurde, werden dem Benutzer Videoschablonen zur Auswahl bereitgestellt 101. Der Benutzer kann dann eine Videoschablone auswählen 102, auf deren Basis ein Video erstellt werden soll.

Als "Videoschablone" wird im Zusammenhang mit der gegenständlichen Erfindung eine definierte, vorgegebene Abfolge von Szenen bezeichnet, wobei jede Szene durch zuvor definierte Szenenparameter gekennzeichnet ist.

Zu den Szenenparametern können unter Anderem zählen:
- die Dauer der Szene (z.B. Dauer in Sekunden oder unbegrenzt)
- eine Standortvorgabe (hinsichtlich Position und/oder Aufnahmerichtung)
- ein Aufnahmeobjekt (z.B.: Fahrzeug, Boot, Person, Landschaft, Haus, etc...)
- eine Kameraführungsvorgabe (z.B.: Schwenk um 360° um ein Objekt)
- eine Bildbereichs-Vorgabe (z.B.: gesamtes Fahrzeug oder Reifen in Großaufnahme)
- Einblendvorgaben für vordefinierte oder wählbare Texte, Videoelemente und andere Effekte (z.B. Werbebanner, Verzierungen, Informationstexte, Graphikanimationen, etc.).

Jede Szene kann eine Kombination aus diesen und/oder anderen Szenenparametern umfassen.

Neben der Anzahl und der Abfolge der in einer Videoschablone enthaltenen Szenen kann die Videoschablone weiters die Art der jeweiligen Übergänge zwischen den einzelnen Szenen als Fixvorgabe oder als vom Benutzer wählbare Auswahl definieren.

Beispielsweise kann eine Videoschablone für die Präsentation eines Fahrzeuges die folgende Struktur haben:
1. Szene: 3 Sekunden Fahrzeug von schräg vorne
2. Szene: 10 Sekunden 360° Schwenk rund um das Fahrzeug (von allen Seiten)
3. Szene: 7 Sekunden 180° Schwenk durch den Innenraum
4. Szene: 5 Sekunden Cockpit
5. Szene: 5 Sekunden Motorraum
6. Szene: 5 Sekunden Großaufnahme Felgen
7. Szene: 5 Sekunden besondere Ausstattungsmerkmale
8. Szene: 4 Sekunden weitere Ausstattungsmerkmale
9. Szene: 4 Sekunden weitere Ausstattungsmerkmale

Die Aneinanderreihung der einzelnen Szenen ergibt in diesem Fall ein definiertes Präsentationsvideo von 48 Sekunden Dauer. Die Dauer kann an die jeweiligen Erfordernisse und an die Betrachtungsgewohnheiten des jeweiligen Zielpublikums angepasst werden.

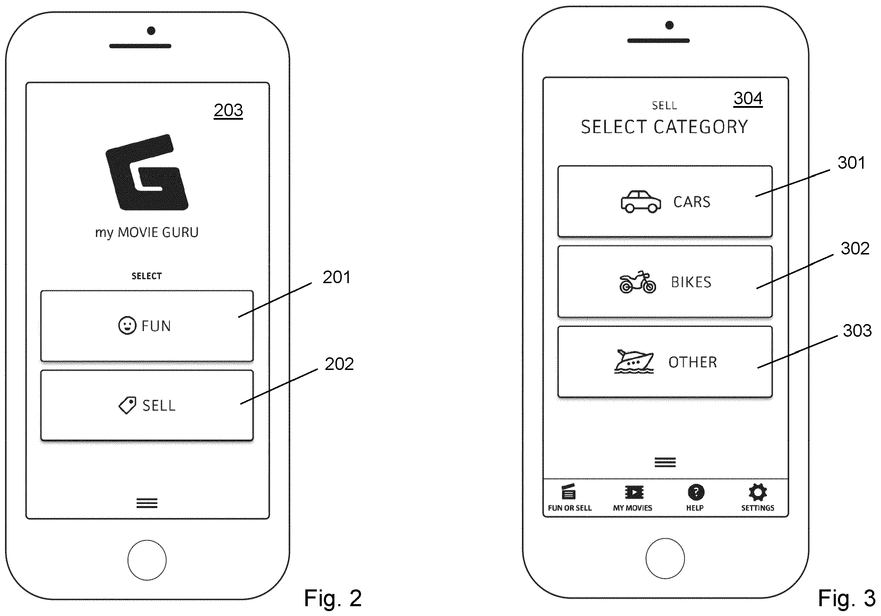

Die Auswahl 102 einer Videoschablone kann beispielsweise in einer Abfolge mehrerer Menüauswahlen erfolgen, wie dies in Fig. 2 und 3 dargestellt ist.

Fig. 2 zeigt den Startbildschirm 203 einer Smartphone-Anwendung, mit der das erfindungsgemäße Verfahren umgesetzt wird. Der Startbildschirm bietet dem Benutzer als Überkategorie die zwei Auswahlmöglichkeiten "FUN" 201 und "SELL". Der Bereich FUN 201 umfasst Videoschablonen, die für die Verwendung im Privatbereich vorgesehen sind, wohingegen der Bereich SELL 202 Videoschablonen umfasst, mit denen ein Produkt gefilmt werden kann, etwa um es auf einer Internetplattform zum Verkauf oder zur Versteigerung anzubieten. Die Videoschablonen im Bereich SELL 202 können beispielsweise von einem im Allgemeinen professionellen Anbieter, zum Beispiel dem Betreiber einer Internetplattform, definiert worden sein, wobei deren Definition gegebenenfalls eine standardisierte und automatisierte Weiterverwendung des erstellten Videos auf die Internetseite diesen Anbieter oder eines Dritten ermöglicht.

Der Bereich FUN 201 ist eine Überkategorie von Videoschablonen, die für eine private Nutzung vorgesehen sind, während der Bereich SELL 202 eine Überkategorie von Videoschablonen darstellt, die ein Zusammenspiel mit professionellen Anbietern ermöglicht. Darüber hinaus können weitere professionelle, private oder gemischte Überkategorien vorgesehen sein, die jeweils einem bestimmten Zweck zugeordnet sind. Die Darstellung der Überkategorien FUN und SELL sind rein beispielhaft und es können je nach Bedarf unterschiedliche Sätze an Überkategorien am Startbildschirm dem Benutzer zur Auswahl angeboten werden.

Zu Beispielen für weitere Überkategorien zählen eine Kategorie für die Erstellung von persönlichen Präsentationsvideos, etwa für Datingplattformen, Singlebörsen, Jobbörsen oder ähnliches, eine Kategorie für Bewertungen von Restaurants, Hotels, Eventlocations, etc., oder eine Kategorie für die Präsentation von Geschäften, Lokalen oder anderen Locations, oder für die Präsentation von Geschäftsideen und Projekten, beispielsweise für Crowdfunding-Plattformen.

Die Auswahl der Überkategorie SELL 202 in Fig. 2 führt zur der in Fig. 3 dargestellten Schirmansicht 304, in der einige Kategorien der Überkategorie SELL dargestellt sind. In Fig. 3 sind die Kategorien "CARS" 301, "BIKES" 302 und "OTHER" 303 jeweils mit einem repräsentativen Icon dargestellt. Die Auswahl von CARS 301 führt zu Videoschablonen, die dem Verkauf von Fahrzeugen dienen, BIKES 302 betrifft Motorräder und OTHER 303 führt zu weiteren Kategorien oder Videoschablonen. Weitere Kategorien in dieser Überkategorie könnten beliebige Gegenstände betreffen, die verkauft, vermietet oder versteigert werden sollen. So können beispielsweise nicht nur beliebige bewegliche Gegenstände mit einer eigenen Videoschablone präsentiert werden, sondern etwa auch Immobilien, die zu Verkauf oder zur Vermietung angeboten werden.

Wenn der Benutzer eine Kategorie auswählt, kann entweder direkt eine entsprechende Videoschablone geöffnet werden, oder es können weitere Auswahlmöglichkeiten angeboten werden, beispielsweise eine Liste von Videoschablonen in dieser Kategorie.

Wenn ein Benutzer beispielsweise ein Präsentationsvideo seines Fahrzeugs für den Verkauf filmen will, wählt er die Kategorie CARS 301, woraufhin eine neue Videodatei erstellt wird, die auf einer Videoschablone für den Fahrzeugverkauf basiert. Gegebenenfalls könnte auch eine Auswahl mehrerer unterschiedlicher Videoschablonen angeboten werden, etwa für LKW, PKW, Sportwagen, Vans, etc.

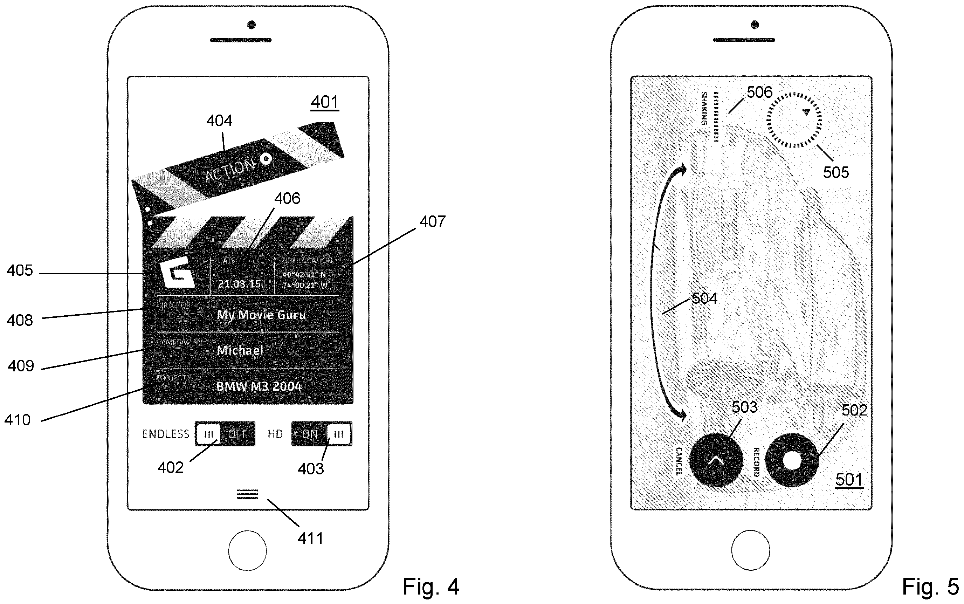

Der oben beschriebene Auswahlvorgang entspricht in Fig. 1 dem Schritt 102 der Benutzerauswahl einer Videoschablone. Als Nächstes wird in Schritt 103 eine Benutzerschnittstelle mit Informationen über die gewählte Videoschablone, die aufzunehmende Videodatei und die nächste zu filmende Szene angezeigt. Eine entsprechende Schirmansicht 401 ist in Fig. 4 dargestellt.

Die Schirmansicht 401 der Fig. 4 entspricht der graphischen Darstellung einer Filmklappe, wobei die wesentlichen Informationen über das aktuelle Videoprojekt übersichtlich dargestellt sind. Zusätzlich können mehrere Schaltelement 402, 403 dargestellt sein, etwa zum Umschalten der Auflösung (HD-Modus-Schaltelement 403) oder ein Schaltelement 402 zum Ein- und Ausschalten eines "ENDLESS"-Modus. Im ENDLESS-Modus wird die automatische Qualitätskontrolle (die weiter unten eingehender beschrieben wird) deaktiviert, etwa um Videos trotz schlechter Umgebungsbedingungen aufnehmen zu können.

Die Filmklappe der Fig. 4 enthält einen Action-Button 404 zum Starten der Aufnahme und darunter die folgenden Informationen:
- Nummer der nächsten zu drehenden Szene in der gewählten Videoschablone (bei einem neuen oder bereits fertiggestellten Video kann anstelle der Nummer ein Logo 405 des Anbieters angezeigt werden, wie dies in Fig. 4 der Fall ist)
- Datum der Aufnahme 406
- GPS-Positionsdaten 407
- Regisseur oder Produzent (oder auch Anbieter der Videoschablone) 408
- Kameramann (als Vorgabewert kann beispielsweise der Benutzername des Benutzers des Smartphones verwendet werden) 409
- Projektname 410 (im dargestellten Fall die Bezeichnung des zu verkaufenden Fahrzeugs).

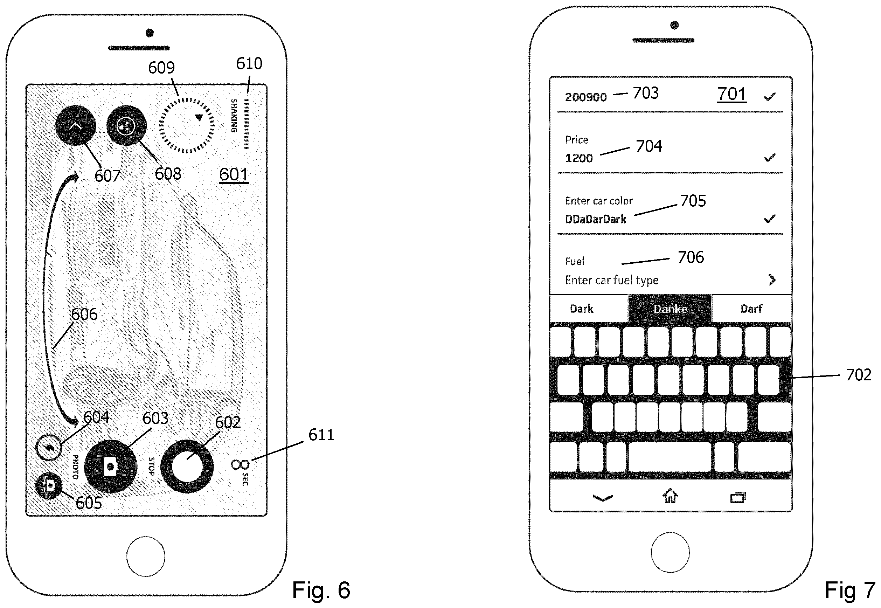

Je nach Videoschablone können bestimmte Informationen geändert werden oder sie werden vom Programm unveränderlich vorgegeben. Die Informationen werden als Videodaten gespeichert. Zur Eingabe einer Änderung kann, wie dies bei Smartphones üblich ist, der entsprechende Eintrag mit einer Berührung ausgewählt, und der gewünschte Text mit einer Bildschirmtastatur eingegeben, korrigiert bzw. ergänzt werden. Das Datum der Aufnahme und die Geoposition werden vom System vorgegeben und können vorzugsweise nicht geändert werden. Manche oder alle in der Filmklappe dargestellten änderbaren Informationen und zusätzliche Videodaten können auch von anderen Schirmansichten aus geändert werden, wie etwa der Schirmansicht 701 die weiter unten in Zusammenhang mit Fig. 7 beschrieben wird.

Im unteren Bildbereich kann durch eine Gestensteuerung ein Navigationsmenü 411 mit weiteren Menüoptionen eingeblendet werden.

Bevor bei Schritt 104 (Fig. 1) der Benutzer durch Auswählen des Action-Buttons 404 die Aufnahme der Szene beginnt, kann er durch Gestensteuerung (z.B. seitliches Wischen) eine andere Szene auswählen. Nach der Auswahl des Action-Buttons können gegebenenfalls noch weitere Schirmansichten angezeigt werden, etwa eine Beschreibung der Szene, deren Dauer, und Hinweise, wie sie aufzunehmen ist. Es können in der Filmklappe neben der Szenennummer auch weitere Kurzinformationen über die aufzunehmende Szene dargestellt sein. Gegebenenfalls kann durch weitere Gesten auch auf die weiter unten (in Fig. 7) beschriebene Schirmansicht 701 zur Eingabe von Detailinformationen (Videodaten) zugegriffen werden, falls der Benutzer diese bereits vor der Aufnahme eingeben will.

Nach der Auswahl des Action-Buttons 404 und gegebenenfalls der Anzeige von Szeneninformationen wechselt das Gerät in den Aufnahmemodus um die nächste Szene zu filmen (Schritt 105 in Fig. 1).

Fig. 5 zeigt eine Schirmansicht 501 im Aufnahmemodus, wobei zum Einrichten der Kameraposition die Aufnahmefunktion vorerst pausiert (Pause-Modus) und erst durch das Betätigen der Schaltfläche "RECORD" 502 die eigentliche Aufnahme gestartet wird (Aufzeichnungs-Modus). Im Pause-Modus können in der Schirmansicht 501 weitere Informationen über die aufzunehmende Szene und Hinweise, wie diese am besten gelingt, eingeblendet bzw. überlagert sein. In der Schirmansicht 501 sind beispielsweise eine Schaltfläche "CANCEL" 503, mit der die Aufnahme abgebrochen wird, ein Schwenkpfeil 504, der den gewünschten Kameraschwenk für die Szene angibt, eine Kompassanzeige 505 und eine Verwackelungsanzeige 506 dargestellt. Im Hintergrund ist das Motiv zu sehen, das gerade von der Kamera aufgenommen wird, im dargestellten Fall wird gerade ein Fahrzeug gefilmt.

Alle Schirmansichten können entweder horizontal oder vertikal dargestellt werden, wobei die Art der Darstellung mit den Positionssensoren des Smartphones gekoppelt sein kann, wie dies im Fachbereich bekannt ist.

Dem Benutzer können auch weitere Hinweise angezeigt werden, wie die nächste Szene aufgenommen werden soll, etwa eine textliche Beschreibung des Szenenablaufs. Die Beschreibung kann auch von anderen Faktoren abhängig gemacht werden, etwa der Lichtsituation oder der aktuellen Ausrichtung des Smartphones. So kann beispielsweise für eine Szene eine bestimmte Tageszeit, eine bestimmte Geoposition oder einer Aufnahmerichtung (z.B: Blickrichtung Süden) vorgesehen sein. Ein Hinweis auf diese Voraussetzungen kann in Abhängigkeit davon angezeigt werden, ob diese Vorgabe gerade erfüllt wird, oder nicht. Gegebenenfalls kann auf eine Handlungsanweisung angezeigt werden, z.B. ein animierter Kompasspfeil, der den Benutzer dazu bringt, sich für die Aufnahme der Szene in die richtige Richtung zu drehen.

Bezogen auf das Beispiel des Fahrzeugvideos könnte die Beschreibung dem Benutzer beispielsweise erklären, dass die Aufnahme der nächsten Szene zuerst das Fahrzeug schräg von vorne zeigen soll, wobei der gesamte Wagen im Bild ist, und das Fahrzeug dann ein Mal vollständig umrundet wird, um das Fahrzeug von allen Seiten zu zeigen. Durch eine Bildauswertung kann gegebenenfalls ermittelt werden, ob sich tatsächlich ein Objekt, also beispielsweise ein Fahrzeug, im Bild befindet, bzw. ob die Entfernung bzw. Zoomeinstellung richtig gewählt ist und der Gegenstand vollständig im Bild ist. Ein Zoomen kann beispielsweise durch die bekannte Zweifingergeste durchgeführt werden.

Wenn alle Voraussetzungen erfüllt sind, kann dies beispielsweise durch eine farbliche Veränderung der Schaltfläche "RECORD" 502 angezeigt werden. Es liegt in den Einstellungen der Videoschablone, ob die Schaltfläche "RECORD" 502 auch ohne das Vorliegen bestimmter Voraussetzungen aktiviert werden kann, oder ob sie auf Basis definierter Kriterien gesperrt ist.

Wenn das Motiv gewählt ist, kann der Benutzer durch Auswählen der Schaltfläche "RE-CORD" 502 in den Aufzeichnungsmodus wechseln, um die Aufnahme zu beginnen.

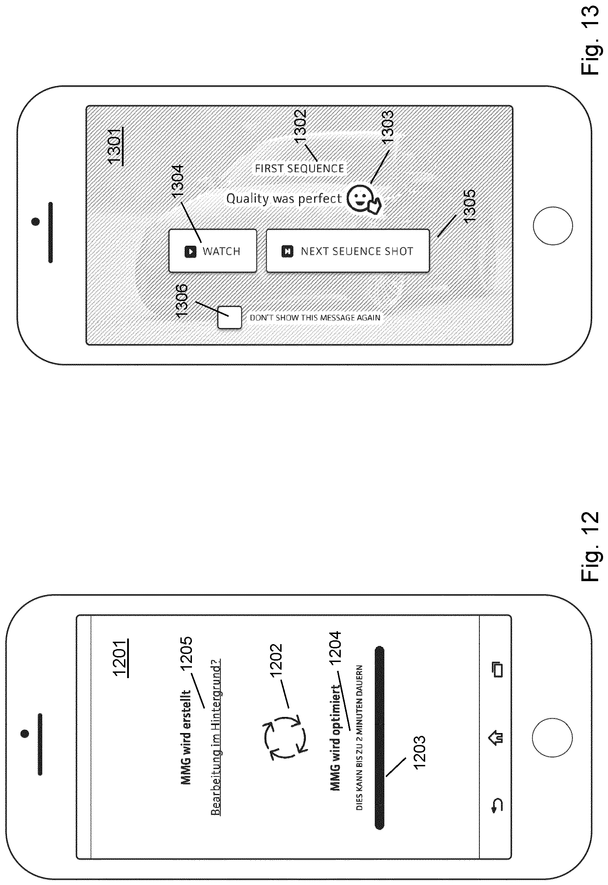

Fig. 6 zeigt eine Schirmansicht 601 im Aufzeichnungs-Modus. Im Aufzeichnungs-Modus, also während der eigentlichen Aufnahme, können mehrere Informations- und Steuerfelder auf dem Display angezeigt werden. An der rechten Seite befinden sich in Fig. 6 die Steuerfelder "STOP" 602 und PHOTO 603. Das Auswählen von STOP 602 beendet die Aufnahme und speichert die Szene, wonach der Benutzer gegebenenfalls zu einer Qualitätsprüfungs-Schirmansicht 1301 (Fig. 13) und dann zurück zur Schirmansicht 401 der Fig. 4 gelangt, wobei die Filmklappe Informationen über die nächste zu filmende Szene zeigt. Wenn bereits alle Szenen aufgezeichnet wurden, wird die in Fig. 7 dargestellte Schirmansicht 701 zur Dateneingabe (bei Schritt 112) angezeigt.

Ein Pausieren während der Aufnahme einer Szene ist in der dargestellten Ausführungsform nicht vorgesehen, da jede Szene einer vollständigen Filmsequenz ohne Schnitte entsprechen soll. Da während jeder Aufnahme auch die Geoposition und die Zeit/das Datum gespeichert wird, stellt dieses Merkmal sicher, dass die gesamte Szene auch an der selben Geoposition und zu einem bestimmten Zeitpunkt aufgenommen wurde. Dies beugt Manipulationen vor. In alternativen Ausführungsformen wäre es jedoch für den Fachmann ohne weiteres möglich, eine Pause-Funktion auch innerhalb einer Aufnahme vorzusehen.

Weitere Schaltflächen in der Schirmansicht 601 sind ein Blitzlichtauswahl-Symbol 604, ein Kamerawechsel-Symbol 605, eine Kameraführungsanweisung 606, eine Abbruch-Schaltfläche 607, eine Effekte-Schaltfläche 608, eine Kompassanzeige 609, eine Verwackelungsanzeige 610 und eine Zeitanzeige 611.

Mit dem Blitzlichtauswahl-Symbol 604 kann während der Aufnahme eine im Smartphone eingebaute oder externe Beleuchtung ein- und ausgeschalten und gegebenenfalls auch gedimmt werden. Mit dem Kamerawechsel-Symbol 605 kann, wenn das Smartphone über mehrere Kameras verfügt, zwischen den Kameras gewechselt werden, oder eine zweite Kamera in einem "Bild-in-Bild"-Modus eingeblendet werden. Das Auswählen der Abbruch-Schaltfläche 607 verwirft die gerade laufende Aufnahme und die Kamera wechselt wieder in den in Fig. 5 dargestellten Pause-Modus.

Die Kompassanzeige 609 gibt die Himmelsrichtung an, in die die Kamera gerade gerichtet ist. Die Kompassanzeige 609 kann beispielsweise bei der Aufnahme von Immobilien wichtig sein, da der Benutzer während der Aufnahme (oder danach) das gefilmte Objekt mit gesprochenen Text beschreiben kann, und etwa für die Beschreibung der Lichtsituation jederzeit wissen sollte, ob die Kamerarichtung beispielsweise gerade nach Süden oder Norden weist. Unter der Kompassanzeige 609. Die Verwackelungsanzeige 610 gibt an, wie stark die Aufnahme verwackelt ist. Gegebenenfalls können noch weitere Qualitätsanzeigen eingeblendet sein, etwa eine Anzeige über die Lichtqualität oder eine Wasserwaage, die anzeigt ob das Bild horizontal ausgerichtet oder schräg geneigt ist.

Die Kameraführungsanweisung 606, die in Form eines Pfeils den gewünschten Verlauf der Kameraführung anzeigt, entspricht im Wesentlichen dem Schwenkpfeil 504 in Schirmansicht 501 und zeigt an im dargestellten Fall an, dass die Kamera einen 360° Schwenk um das Fahrzeug herum vollziehen soll. Durch eine Auswertung der Positions- und Bewegungsdaten, die vom Smartphone aufgezeichnet werden, kann die Kameraführungsanweisung 606 auch in einer animierten Form dargestellt werden. Beispielsweise kann der Fortschritt eines 360° Schwenks durch eine Verlaufsanzeige eingeblendet werden, wobei sich der Pfeil in der Art einer Fortschrittsanzeige bis zur vollständigen 360°-Drehung in der Art eines Fortschrittsbalkens verfärbt. Als weitere Kameraführungsanweisung können beliebige Symbole oder Texte eingeblendet werden, die dem Benutzer auf möglichst intuitive Art einerseits die gewünschte Kameraführung verdeutlichen und andererseits eine Information über den Fortschritt der Aufnahme bieten.

Bei Szenen, die eine fixe Zeitvorgabe haben, kann die Zeitanzeige 611 als Countdown ausgeführt sein, der die Aufnahmezeit in Sekunden rückwärts zählt. Bei Szenen ohne fixe Zeitvorgabe zeigt die Zeitanzeige die bereits aufgenommene Zeit an.

Als Hinweise für die aufzunehmende Szene können gegebenenfalls auch Schemen und Umrisse angedeutet werden, etwa der Umriss einer Person, wenn ein Portrait aufgenommen werden soll, oder die schematische Darstellung eines zu filmenden Gegenstands, wie etwa ein Fahrzeug oder Motorrad.

Während der Aufnahme führt das System eine Reihe von Qualitätsprüfungen durch, die sicherstellen sollen, dass die Aufnahme einer gewünschten Qualität entspricht. Zu Beispielen von Qualitätskriterien, die zu einer Qualitätsprüfung herangezogen werden können, zählen unter anderem:
- Lichtqualität: Bewertet die Ausleuchtung / den Kontrast der gefilmten Szene.
- Verwackeln: Bewertet die Stabilität der Kameraführung.
- Zentriert: Bewertet, ob der gefilmte Gegenstand sich in der Bildmitte befindet.
- Deckung: Bewertet, ob der gefilmte Gegenstand im Bild ausreichend groß dargestellt ist.
- Vollständigkeit: Bewertet, ob Teile des gefilmten Gegenstands sich außerhalb des Bildbereichs befinden.
- Vorgabetreue: Bewertet, ob die aufgenommene Szene den Szenenparametern entspricht. Dazu können auch Algorithmen zur Bilderkennung verwendet werden. Weiters können die Bewegungsdaten ausgewertet werden, um zu ermitteln, ob die aufgenommene Szene den Vorgaben entspricht.

Gemäß den Vorgaben der Videoschablone können die einzelnen Qualitätsprüfungen zwingend oder alternativ vorgesehen sein, wobei auch definiert sein kann, ob die Aufnahme bei nicht Einhalten eines bestimmten Qualitätskriteriums abgebrochen werden soll. Im Allgemeinen führt das nicht Einhalten des Qualitätskriteriums "Lichtqualität" oder "Verwackeln" zu einem Abbruch der Aufnahme. Sollten die Umgebungsbedingungen eine Aufnahme in ausreichender Qualität nicht erlauben, und der Benutzer die Aufnahme dennoch erstellen wollen, kann ein Abbruch der Aufnahme durch Auswählen des ENDLESS-Modus (Schaltfläche 402 in Fig. 4) verhindert werden. Während der Aufnahme können die Qualitätskriterien in der Schirmansicht 601 animiert dargestellt werden, etwa in Form einer animierten Verwackelungsanzeige 610, wobei das Überschreiten eines Grenzwertes beispielsweise auch durch eine farbliche Veränderung (z.B. wird die Anzeige rot) angezeigt werden kann.

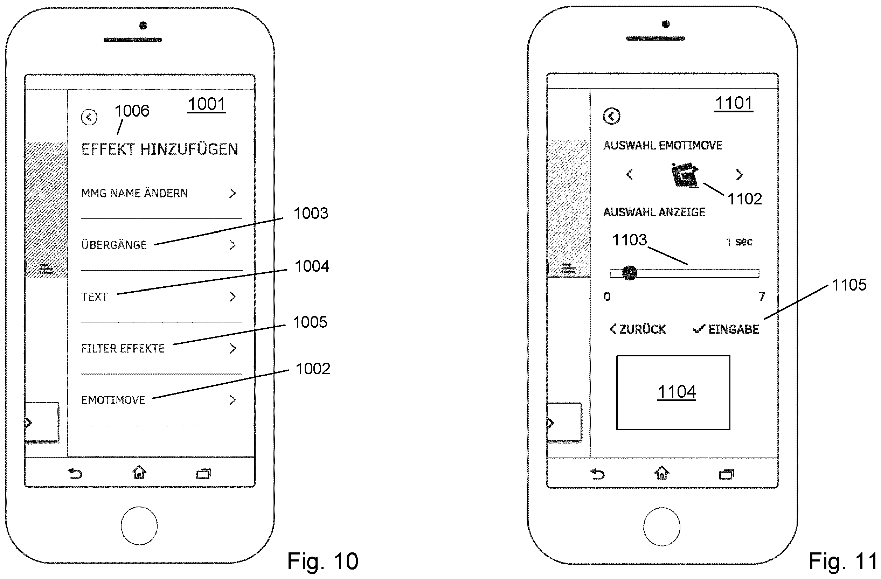

Weiters können während der Aufnahme die folgenden Funktionen entweder durch Gestensteuerung oder mithilfe entsprechender Auswahlschaltflächen angeboten werden:
- "Anker" setzen: Die Stelle wird markiert, etwa um sie für das Einfügen einer Animation schnell wiederfinden zu können.
- Umschalten auf ENDLESS-Modus: Dieser Funktion kann auch während der Aufnahme verfügbar sein, sie kann bei bestimmten Videoschablonen jedoch deaktiviert sein.
- Aufnahme von Bildschirminhalten: Diese Funktion ermöglicht das "Mitschneiden" von Szenen, die auf dem Bildschirm des mobilen Geräts angezeigt werden. Dies erlaubt einem Benutzer beispielsweise, Videospiele während des Spielens aufzuzeichnen und als Szenen in Videos zu integrieren. Es kann auch möglich sein, solch eine Aufnahme aus einer anderen Anwendung (also etwa dem Videospiel) heraus zu starten.
- Bild-in-Bild Modus (kann zum Beispiel über das Kamerawechsel-Symbol 605 aktiviert werden): Für Geräte mit zwei Kameras kann durch Einschalten des Bild-in-Bild-Modus die zweite Kamera, die im Allgemeinen auf den Bediener gerichtet ist, aktiviert werden, und die Aufnahme wird im Video als Fenster eingeblendet, sodass sich der Bediener während der Aufnahme gleichzeitig selber filmt, und beispielsweise seine gesprochenen Kommentare auch durch seine Mimik unterstützen kann. Weiters erlaubt diese Funktion in Verbindung mit der Aufnahme von Bildschirminhalten das Aufnehmen eines Videospiels, während gleichzeitig eine Ansicht des Benutzers beim Spielen in das Video eingeblendet wird. Gegebenenfalls können die Kamerapositionen vertauscht werden, sodass die eigentliche gefilmte Szene im eingeblendeten Fenster aufscheint, und der Hauptbildschirm die von der Zweitkamera aufgenommene Szene zeigt. Der Wechsel zwischen verschiedenen Bild-in-Bild-Einstellungen kann animiert erfolgen.
- Einfügen von Effekten (kann zum Beispiel durch Aufrufen der Effekt-Schaltfläche 609 aktiviert werden): Dabei wird ein Menü mit ähnlichen Schaltelementen, wie sie weiter unten im Zusammenhang mit der Beschreibung der Fig. 10 offenbart sind, bereits während der Aufnahme eingeblendet werden, und der Bediener kann bestimmte Effekte schon während der Aufnahme einfügen.
- Beleuchtung (kann zum Beispiel durch Auswählen des Blitzlichtauswahl-Symbols 604 gesteuert werden): Bei Geräten, die über eine Beleuchtungsfunktion verfügen, kann diese während der Aufnahme ein- und ausgeschalten und gegebenenfalls gedimmt werden. Diese Funktion kann auch mit der gemessenen Lichtqualität gekoppelt sein, wobei die Beleuchtung bei Unterschreiten einer zulässigen Lichtintensität automatisch zugeschalten werden kann. Alternativ kann das Schaltfeld zum Einschalten der Beleuchtung immer dann eingeblendet werden, wenn die gemessene Lichtqualität unter einen Vorgabewert absinkt, das Einschalten der Beleuchtung erfolgt aber durch den Benutzer.

Alle Schaltflächen können entweder direkt eine Aktion bewirken, oder es wird bei der Auswahl ein weiteres Menü oder eine weitere Anordnung von Schaltflächen eingeblendet, um dem Benutzer mehrere Auswahlmöglichkeiten zu bieten.

Nach der Fertigstellung der Aufnahme (entweder durch Ablauf der vorgegebenen Szenendauer, dem Erkennen der Fertigstellung einer Szene (z.B. volle 360° Drehung), oder bei unbegrenzter Szenendauer durch Auswählen der STOP-Schaltfläche 602 erfolgt eine Qualitätsprüfung 106, wobei auch die Qualitätskriterien berücksichtigt werden, die nicht sofort zu einem Abbruch der Aufnahme führen. Gegebenenfalls kann bei einer unzureichenden Qualität, oder wenn die Qualität in einem zuvor definierten Grenzbereich liegt, eine Abfrage an den Benutzer gestellt werden (Schritt 107), ob er die Aufnahme verwerfen will, oder ob die Szene trotz der mangelhaften Qualität gespeichert werden soll. Eine solche Abfrage kann auch standardmäßig vorgesehen sein.

Eine Schirmansicht 1301 zur Qualitätsprüfung ist in Fig. 13 dargestellt. Die Anzeige enthält eine Angabe 1302 über die gerade aufgenommene Szene und eine Qualitätsanzeige 1303, wobei die Qualitätsanzeige 1303 Symbole und/oder textliche Beschreibungen der Qualität enthalten kann. Im dargestellten Fall weist das freundliche Icon und der Text "Quality was perfect" auf eine sehr gute Aufnahmequalität hin.

Die Schirmansicht 1301 beinhaltet weiters eine Schaltfläche "WATCH" 1304, um die aufgenommenen Szene nochmals abzuspielen, eine Schaltfläche "NEXT SEQUENCE SHOT" 1305, um mit der Aufnahme der nächsten Sequenz fortzufahren, und eine Checkbox 1306, mit der die Anzeige dieser Schirmansicht 1301 für die Zukunft deaktiviert werden kann.

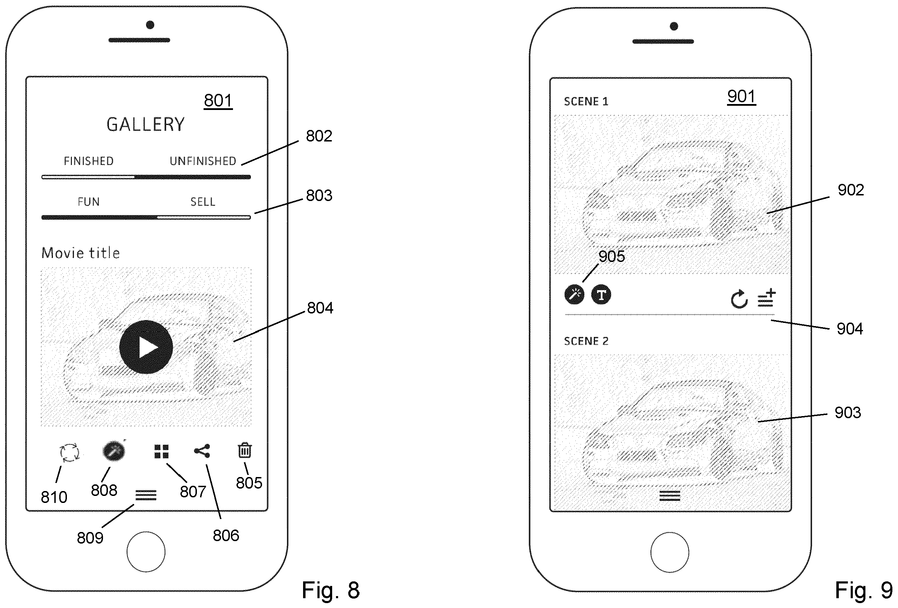

Im Hintergrund der Schirmansicht 1301 wird ein Symbolbild der Szene, üblicherweise der Beginn der Aufnahme, angezeigt. Das Symbolbild für eine Szene oder ein Video kann über die Einstellungen der Szenengalerie (siehe Fig. 8) nachträglich geändert werden.

Wenn die Aufnahme aufgrund einer unzureichenden Qualität abgebrochen wurde, oder wenn die Qualitätsprüfung (gegebenenfalls mit Benutzerabfrage) negativ ausfällt, wird die Schirmansicht 401 der Fig. 4 mit den Informationen der selben Szene nochmals angezeigt (Schritt 109) und der Benutzer kann die Szene nochmals aufnehmen, oder auch eine andere Szene für die nächste Aufnahme auswählen.

Wenn die Qualitätsprüfung in Schritt 106 und 107 positiv ist, wird die Szene mit den damit verknüpften Informationen (z.B. Geodaten, Ausrichtung der Kamera, etc.) gespeichert (Schritt 108).

Dann wird in Schritt 111 geprüft, ob alle in der Videoschablone vorgesehenen Szenen aufgenommen wurden. Wenn das nicht der Fall ist, wird die Schirmansicht 401 der Fig. 4 mit den Informationen der nächsten aufzunehmenden Szene angezeigt (Schritt 110) und der Benutzer kann mit der Aufnahme dieser Szene beginnen. Bei Videoschablonen, für die eine variable Anzahl an Szenen definiert ist, kann anstelle dessen auch eine Benutzerabfrage erfolgen, ob der Benutzer weitere Szenen aufnehmen will.

Wenn alle Szenen fertig aufgenommen sind wird dem Benutzer die Möglichkeit geboten, die der Videoschablone zugeordneten Videodaten einzugeben bzw. zu bearbeiten (Schritt 112). Als Videodaten werden alle Daten bezeichnet, die gemäß der Videoschablone dem Video zugeordnet sind, die jedoch kein Teil der Videoschablone sind. Bestimmte Videodaten, wie etwa die Geopositionen, das Datum und die Uhrzeit der aufgenommenen Szenen, können vom Benutzer nicht geändert werden. Bei bestimmten anderen Videodaten können automatisch Vorgabewerte übernommen werden, die dann vom Benutzer verändert werden können. Wieder andere Videodaten betreffen zum Beispiel das aufgenommene Objekt und können nur vom Benutzer eingegeben werden. Je nach Definition können Videodaten für alle Szenen einer Videoschablone identisch sein (z.B. der Projektname), oder sie können sich für die unterschiedlichen Szenen unterscheiden (z.B. die Geoposition, der Kameramann, etc.).

Fig. 7 zeigt eine Schirmansicht 701 mit einer Auflistung von Videodaten 703, 704, 705, 706, die das Präsentationsvideo für das Fahrzeug betreffen, also etwa das Baujahr, die Marke, die km-Leistung, die Preisvorstellung, etc. Die Liste der Videodaten hängt natürlich stark von der Art des Videos ab und können vom Anbieter der Videoschablone nach Bedarf zusammengestellt werden. Dabei ist zu berücksichtigen, dass bestimmte Videodaten vorgesehen sein können, um in das fertige Video in vorbestimmter Weise und an einer vorbestimmten Position eingeblendet zu werden. Die Liste der Videodaten ist in Fig. 7 nur teilweise zu sehen, und es kann durch Gestensteuerung durch die Listeneinträge gescrollt werden. Zum Eingeben von Videodaten wird das entsprechende Feld ausgewählt, und die Daten können über ein eingeblendetes Tastatur-Tastenfeld 702 eingegeben werden.

Auf die Schirmansicht 701 der Fig. 7 kann auch an einer anderen Stelle, bzw. von einem anderen Punkt aus zugegriffen werden, beispielsweise von der Schirmansicht 401 der Fig. 4 aus. Die Schirmansicht kann beispielsweise durch Gestensteuerung oder vom Navigationsmenü 411 der Schirmansicht 401 aus ausgewählt werden. Auch in der Schirmansicht 701 der Fig. 7 oder auch in anderen Schirmansichten kann ein solches Navigationsmenü im unteren Bildbereich eingeblendet sein, wobei das Navigationsmenü im Falle der Schirmansicht 701 der Fig. 7 gerade von dem Tastatur-Tastenfeld 702 überdeckt ist.

Allgemein kann auf unterschiedliche Weise auf die unterschiedlichen Schirmansichten zugegriffen werden. Die hierin beschriebene Reihenfolge ist daher rein beispielhaft und nicht einschränkend auszulegen. Beispielsweise kann eine Bearbeitung der Videodaten und eine Bearbeitung der Szenen bereits vorgenommen werden, wenn noch nicht alle Szenen fertiggestellt sind, und die Aufnahme der weiteren Szenen kann, je nach Wunsch des Benutzers und nach den Vorgaben der Videoschablone, zu einem späteren Zeitpunkt erfolgten.

Wenn die Daten in Schritt 112 über die Schirmansicht 701 eingegeben wurden, gelangt der Benutzer in der nächsten Schirmansicht zu einer Szenengalerie 801, die in Fig. 8 beispielhaft dargestellt ist (Schritt 113). In der Szenengalerie 801 kann das gemäß der Videoschablone aus den einzelnen Szenen zusammengestellte Video vorab betrachtet und bearbeitet werden. Da für die Bearbeitung eines Videos in Großformat (z.B. in HD-Qualität) eine erhebliche Rechenleistung erforderlich ist, und diese Bearbeitung auch eine gewisse Zeit in Anspruch nimmt, wird für die Vorschau nur eine Vorabversion des Videos in verkleinerter Darstellung berechnet. Von der Szenengalerie 801 aus kann der Benutzer jederzeit zu den anderen Schirmansichten zurückkehren, etwa um Videodaten zu korrigieren oder zu ergänzen, oder um Szenen neu aufzunehmen oder noch nicht aufgenommene Szenen aufzunehmen.

In der Szenengalerie 801 kann die Auswahl der angezeigten Szenen bzw. Videos über Auswahlschieber 802, 803 eingeschränkt werden. Mit dem Auswahlschieber 802 kann zum Beispiel die Auswahl auf bereits fertiggestellte Videos ("FINISHED") oder auf noch nicht fertiggestellte Videos ("UNFINISHED") eingegrenzt werden. Der Auswahlschieber 803 erlaubt eine Einschränkung auf den Bereich "FUN" und "SELL". Unterhalb der Auswahlschieber 802, 803 ist eine Videovorschau 804 dargestellt, in der das gerade ausgewählte Video als Symbolbild dargestellt ist und abgespielt werden kann.

Unterhalb der Videovorschau 804 sind wählbare Icons zum Löschen des Videos 805, zum Veröffentlichen des Videos 806, zum Einblenden und Auswählen anderer Videos 807 und zum Bearbeiten des ausgewählten Videos 808 angeordnet. Weitere Optionen können über ein Navigationsmenü 809 eingeblendet werden.

Die Szenengalerie 801 bietet die Möglichkeit, einzelne Szenen der Videos zu Bearbeiten. Dazu kann der Benutzer das Icon 808 zum Bearbeiten des Videos auswählen, um zu einer Szenenauswahl-Schirmansicht 901 zu gelangen, die in Fig. 9 dargestellt ist. In der Szenenauswahl-Schirmansicht 901 sind Symbolbilder der einzelnen Szenen des Videos untereinander dargestellt, wobei immer zwei Szenen 901, 902 gleichzeitig übereinander dargestellt zu sehen sind, von denen die obere Szene 902 aktuell bearbeitet werden kann. Zwischen den Szenen ist ein Übergangsbereich 904 vorgesehen, in dem über Icons die Eigenschaften des Übergangs von einer Szene zur nächsten ausgewählt und angepasst werden kann.

Durch Wischgesten nach oben und unten kann eine andere Szene für die Bearbeitung ausgewählt werden. Durch Antippen des Vorschaubilds kann die jeweilige Szene 901, 902 abgespielt und angesehen werden. Dabei können auch alle Text- oder Videoeffekte, die bereits hinzugefügt wurden, mitangezeigt werden.

Mit einer Wischgeste oder durch Betätigen des Bearbeiten-Icons 905 kann seitliches Kontextmenü eingeblendet werden, mit dem Effekte hinzugefügt werden können. Dieses Effekte-Menü 1001 ist in Fig. 10 beispielhaft dargestellt. Das Effekte-Menü 1001 kann beispielsweise die folgenden Bearbeitungen ermöglichen:
- "EMOTIMOVE" 1002: Hinzufügen von animierten graphischen Objekten
- "ÜBERGÄNGE" 1003: Auswählen und Einstellen des Übergangs zur nächsten Szene
- "TEXT" 1004: Einfügen von Lauftexten und animierten oder starren Texteinblendungen
- "FILTER EFFECTE" 1005: Anwenden eines Filters auf die Szene oder auf Teile der Szene
- "SOUNDS" (nicht in Fig. 10 dargestellt): Hinzufügen von Klangeffekten und "Übersprechen" des Audiokanals
- "BANNER" (nicht in Fig. 10 dargestellt: Hinzufügen eines Vordergrunds / Hintergrunds / Rahmens / Banners.

Die Auswahl eines dieser Punkte öffnet ein weiteres Kontextmenü, in dem mit einfachen Bedienschritten die gewünschten Funktionen ausgewählt werden können. Gegebenenfalls können weitere Menüpunkte vorgesehen sein, die durch Scrollen der Liste in die Schirmansicht gebracht werden können.

In Beispielhafter Weise ist in Fig. 11 das Menü 1101 dargestellt, das bei Auswahl des Menüpunkts 1002 "EMOTIMOVE" angeboten wird. Als "Emotimoves" werden kleine, animierte Graphikelemente bezeichnet, die im Gegensatz zu Emoticons nicht an eine bestimmte Zeilen- bzw. Textposition gebunden sind, sondern sich auch in vorbestimmter Weise über den Bildschirm bewegen können. Emotimoves erlauben es dem Benutzer, persönliche Emotionen, die er mit der gezeigten Szene verbindet, schnell und einfach an einer beliebigen Stelle in das Video einzufügen, und seine eigenen Emotionen dadurch Zusehern auf eine direkte und intuitive Art mitzuteilen. Zum Auswählen eines Emotimoves wird dieses in die Emotimove-Anzeige 1102 gebracht, indem die dort angebotene Auswahl durchblättert wird. Mit einem Zeitschieber 1103 kann die gewünschte Zeitposition, an der das ausgewählte Emotimove im Video erscheinen soll, eingestellt werden, wobei ein Standbild der Szene in dieser Zeitposition in einer verkleinerten Thumbnail-Darstellung 1104 gezeigt werden kann. Dies erleichtert dem Benutzer die Auswahl der Zeitposition in der Szene. Bei manchen Emotimoves können weitere Einstellungen vorgenommen werden, etwa die Bildschirmposition an der es erscheint, oder in die es sich bewegen soll, die Farbe, die Größe, etc. Die Einstellungen werden vorzugsweise über ein Kontextmenü eingestellt, das bei der Auswahl des Emotimoves eingeblendet werden kann. Durch Auswählen von "EINGABE" 1105 wird das gewählte Emotimove mit den gewählten Einstellungen in die Szene eingefügt.

Mit dem Menüpunkt BANNER (in Fig. 10 nicht dargestellt) können weitere animierte oder statische graphische Elemente hinzugefügt werden, etwa ein Vordergrund, ein Bildhintergrund, ein Rahmen oder ein Banner. Sowohl im Menüpunkt BANNER, als auch im Menüpunkt EMOTIMOVE 1002 kann die Auswahl der verfügbaren Elemente von der Geoposition abhängig sein, an der das Video aufgenommen wurde. Diese Funktionalität ist insbesondere im weiter unten beschriebenen FUN-Modus vorteilhaft verwendbar.

Nach der Auswahl der Effekte im Effekte-Menü 1001 (Fig. 10) wird der Vorgang durch Auswählen der Schaltfläche "EFFEKT HINZUFÜGEN" 1006 bestätigt und man gelangt zurück zur Szenenauswahl-Schirmansicht (Fig. 9) wo man die Szene mit dem eingefügten Emotimove direkt vorab betrachten kann.

Wenn alle gewünschten Bearbeitungsschritte in allen Szenen durchgeführt wurden, gelangt man durch Gestensteuerung, beispielsweise durch eine Wischbewegung nach rechts, zurück zur Szenengalerie, wo man sich das gesamte bearbeitete Video nochmals vorab in verkleinerter Darstellung ansehen kann. Durch Auswählen eines Fertigstellen-Icons 810 wird nun das gesamte Video in der gewählten Qualität zusammengestellt, mit den gewählten Effekten versehen und als Datei in der ausgewählten oder voreingestellten Auflösung gespeichert (Schritt 114).

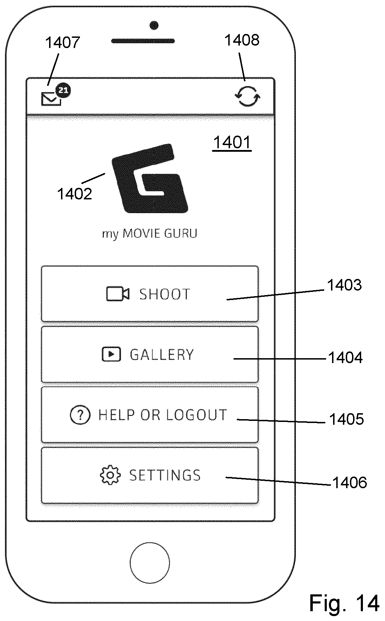

Während das Video berechnet, optimiert und fertiggestellt wird, kann eine Hinweis-Schirmansicht 1201 angezeigt werden, wie sie in Fig. 12 dargestellt ist. Durch ein gegebenenfalls animiertes Symbol 1202 wird auf den gerade laufenden Rechenvorgang hingewiesen und ein Fortschrittsbalken 1203 und eine Zeitangabe 1204 geben die geschätzte Dauer bis zur Fertigstellung an. Durch Auswählen der Schaltfläche "Bearbeitung im Hintergrund?" 1205 kann die Hinweis-Schirmansicht 1201 verlassen werden und das Video wird im Hintergrund fertiggestellt, während die Anwendung eine Hauptmenü-Schirmansicht 1401 anzeigt, wie sie in Fig. 14 dargestellt ist.

Nach dem Erstellen und Speichern des fertigen Videos kann in Schritt 115 auch ein automatisierter Upload des Videos auf Internetplattformen oder auf einen Cloudserver erfolgen.

Die in Fig. 14 dargestellte Hauptmenü-Schirmansicht 1401 zeigt ein Anbieterlogo 1402 und darunter die beispielhaften Menüpunkte "SHOOT" 1403, "GALLERY" 1404, "HELP OR LOGOUT" 1405 und "SETTINGS" 1406. Durch auswählen von "SHOOT" 1403 gelangt der Benutzter zur Schirmansicht 203 der Fig. 2, um mit der Produktion eines neuen Videos zu beginnen. Die Auswahl von "GALLERY" 1404 führt zur Schirmansicht 801 der Fig. 8, "HELP OR LOGOUT" 1405 bietet eine Hilfefunktion und ermöglicht es dem Benutzer, sich auszuloggen, und die Auswahl von "SETTINGS" 1406 blendet ein Einstellungsmenü ein.

Die obige Beschreibung der in Fig. 1 schematisch dargestellten Schritte bieten die Grundlage für die einfache Erstellung von Videos gemäß vorgefertigter Videoschablonen, wobei der Ablauf der einzelnen Schritte 100-115 nicht zwingend in der dargestellten Reihenfolge erfolgen muss. Vielmehr ist es möglich, über die Menüführung einzelne Schritte zu überspringen, in einer anderen Reihenfolge abzuarbeiten, oder von einer beliebigen Stelle aus an eine beliebige andere Stelle zu navigieren, etwa um bereits vorgenommene Schritte zu wiederholen oder zu korrigieren, oder noch nicht getätigte Schritte vorweg durchzuführen.

Weiters können verschiedene Bedienungselemente, Anzeigen oder Menüs nicht nur in den Schirmansichten vorgesehen sein, in denen sie in der obigen beispielhaften Ausführungsform dargestellt sind, sondern sie können auch in anderen Schirmansichten beliebig hinzugefügt werden, sofern dies funktionell sinnvoll, vom Benutzer gewünscht oder für diesen vorteilhaft ist.

Im Folgenden werden verschiedene Anwendungsmöglichkeiten für die mit dem obigen erfindungsgemäßen Verfahren erstellten Videos dargelegt und weitere Merkmale offenbart, die erfindungsgemäß vorteilhaft verwendet werden können.

Es ist zu beachten, dass das fertige, gespeicherte Video mehrere Merkmale aufweist, die erfindungsgemäß genutzt werden können, und die im Folgenden schlagwortartig zusammengefasst sind:
- Die Videos können in einem proprietären Videoformat (z.B.: .mmg) gespeichert werden, das eine standardisierte Nutzung, Verarbeitung und Weiterverbreitung dieser Videos erlaubt.
- Jede Videodatei enthält einen vordefinierten Datensatz mit Benutzerangaben, die für eine Weiterverarbeitung automatisch ausgewertet werden können.
- Jedes Video ist für jede Szene mit einer eindeutigen Positionsangabe versehen, aus der verifiziert werden kann, dass die Aufnahme an der Stelle aufgenommen wurde, die vom Benutzer angegeben wird.
- Alle Videos, die mit der selben Videoschablone aufgenommen wurden, sind sich ähnlich und untereinander vergleichbar.
- Durch die Qualitätskontrolle kann sichergestellt werden, dass alle Videos, die mit einer bestimmten Videoschablone aufgenommen wurden, einen qualitativen Mindeststandard entsprechen.
- Durch das Einfügen von Emotimoves ist es dem Benutzer möglich, seine eigenen Emotionen und Assoziationen, die er mit der gefilmten Szene verknüpft, in einer einfachen und intuitiv verständlichen Bildsprache in das Video einzubauen und dem Zuseher verständlich zu machen.

Sowohl im professionellen bzw. geschäftlichen Bereich, als auch für die private Verwendung sind zahllose Anwendungen möglich, wobei im Folgenden einige vorteilhafte Anwendungsfälle beispielhaft beschrieben werden.

Gemäß dem oben beschriebene Beispiel erlaubt das Erfindungsgemäße Verfahren einem Betreiber einer Internetplattform, zum Beispiel eines Online-Anzeigenportales, einer Versteigerungsplattform oder einer anderen Handelsplattform, seinen Benutzern eine einfache Möglichkeit bereitzustellen, sein Einschaltung zu erstellen und hochzuladen. Jedes Video entspricht genau den Vorgaben, die vom Betreiber spezifiziert wurden, und kann daher direkt und automatisiert in eine Anzeige bzw. ein Verkaufs- bzw. Versteigerungsanbot des Benutzers umgewandelt und auf der Plattform veröffentlicht werden. Vorzugsweise folgen alle Videoschablonen des selben Betreibers (oder auch mehrerer Betreiber) dem gleichen Grundkonzept hinsichtlich ihrer Länge und ihrer Szenenabfolge, sodass die Videos betreiberübergreifend verwendet werden können.

Der Benutzer der Internetplattform, der ein Angebot erstellen will, hat den Vorteil, dass er mit einem einzigen Programmprodukt nicht nur eine sehr professionelle Präsentation auf einfache Weise erstellen kann, sondern dass er mit einem einzigen Klick diese Präsentation auf die Internetplattform seiner Wahl hochladen und veröffentlichen kann. Wenn die Videoschablonen für mehrere Internetseiten geeignet ist, kann der Benutzer zuerst die Präsentation erstellen, und sich erst danach überlegen, ob er den Gegenstand verkaufen oder versteigern will. Es ist auch möglich, die selbe Anzeige auf mehreren Plattformen zu veröffentlichen, ohne dass dazu jedes Mal der oft mühselige Eingabevorgang durchlaufen werden muss.

Dazu kann nach der Fertigstellung des Videos eine Schirmansicht mit einer Menüauswahl an Internetportalen, die für einen Upload ausgewählt werden können, angezeigt werden. Vorzugsweise wird diese Schirmansicht angezeigt, nachdem ein Video erstellt und (in Schritt 115) gespeichert wurde.

Die Vorgehensweise des Uploads auf ein Internetportal wird im Folgenden anhand der (fiktiven) Internetplattformen inserate.com, auktion.com und auto.verkauf beispielhaft beschrieben:
Durch Auswählen des Menüpunkts inserate.com wird das erstellte Video auf diese Internetplattform hochgeladen und dort in eine Anzeige umgewandelt und veröffentlicht. Die fiktive Internetplattform "inserate.com" steht stellvertretend für die zahlreichen im Internet verfügbaren Inseratenseiten, wie etwa willhaben.at oder locanto.com. Bei einer Auswahl von auktio-nen.com wird das Video auf diese fiktive Auktionsseite hochgeladen. "auktionen.com" steht stellvertretend für bekannte Internet-Auktionsplattformen wie etwa ebay.com oder tao-bao.com. Bei einer Auswahl von auto.verkauf wird das Video in dieser fiktiven Inseratenseite für Gebrauchtwagen veröffentlicht. "auto.verkauf" steht stellvertretend für bekannte Gebrauchtwagen-Handelsplattformen wie etwa gebrauchtwagen.com oder mobile.de.

Nach der Auswahl kann der Benutzer gegebenenfalls über ein Menü aufgefordert werden, zusätzliche Informationen einzugeben, die in den Videodaten nicht enthalten sind, beispielsweise eine Auktionsdauer, einen Fixpreis oder einen Rufpreis. Eine solche Aufforderung kann auch erfolgen, wenn Videodaten, die die jeweilige Internetplattform zwingend erfordert, zwar als Videodaten definiert, aber vom Benutzer (in Schritt 112) nicht oder nicht gemäß den Vorgaben eingegeben wurden. Weiters kann die Internetplattform Regeln erstellen, die Betrügerische Anzeigen erkennt, etwa wenn der vom Anbieter angegebene Standort in einem groben Missverhältnis zu den Geopositionsdaten in dem Video steht (etwa wenn ein Video einer Immobilie nicht am angegebenen Standort der Immobilie aufgenommen wurde oder wenn versucht wird, Piraterieware vom Ausland anzubieten).

Andere Benutzer der Internetplattform, die als Interessenten auf der Suche nach einem Kauf- oder Ersteigerungsobjekt sind, haben durch die standardisierten Videos eine einfache Möglichkeit, schnell einen Eindruck von dem angebotenen Produkt zu erhalten. Da alle Videos in ihrer Grundstruktur gleichartig sind, die selbe überschaubare Länge aufweisen, und auch bestimmten Qualitätsanforderungen entsprechen, wird die Hemmschwelle, die zum Anklicken und Öffnen eines Videos unbekannter Provenienz bestehen kann, überwunden. Auch hat der Interessent die Möglichkeit, die Geopositionsdaten und das Erstellungsdatum des Videos zu überprüfen und so erkennen, ob die Aufnahme aktuell ist, und der Gegenstand sich am angegebenen Standort befindet.

Ein weiteres Beispiel für die Nutzung des erfindungsgemäßen Verfahrens ist der Bereich der Onlinedating-Plattformen. Vielen Benutzern fällt es schwer, sich auf diesen Seiten gut und repräsentativ zu präsentieren. Durch entsprechende Videoschablonen kann jeder Benutzer in kurzer Zeit ein professionell anmutendes Video von sich erstellen, das einem interessierten Betrachter einen guten Eindruck von der Person und seinem Umfeld bietet und das Interesse weckt, sich näher mit dem Profil zu beschäftigen. Auch dabei können die einsehbaren Datums- und Positionsdaten eine missbräuchliche Verwendung solcher Internetplattformen verhindern und der Erstellung von "Fake-Profilen" vorbeugen.

Ähnliches gilt für Jobbewerbungen auf Online-Stellenbörsen. Ein kurzes Video des Bewerbers kann einen viel vollständigeren Eindruck von der Person vermitteln, als dies mit dem Bewerbungsschreiben und dem Lebenslauf alleine möglich wäre.

Ein weiterer Anwendungsbereich ist die Erstellung von Projektpräsentationen, etwa für Crowdfunding-Plattformen, wobei eine entsprechende Videoschablone es dem Protagonisten erlaubt, in einer Art "Elevator Pitch" sein Projekt interessierten Finanziers schnell näherzubringen. Auch Künstler können ihre Werke und Projekte auf diese Weise effizient vermitteln und bewerben.

Im Gastgewerbe und im Tourismus können Hotels, Restaurants oder einfache Gaststätten oder Herbergen Präsentationsvideos für ihren Betrieb oder für spezielle Events erstellen, die auf Lokalführer-Internetseiten verlinkt werden können. Diese Seiten können auch den Kunden dieser Lokale die Möglichkeit bieten, bei ihrem Besuch Bewertungsvideos zu erstellen, die dann gleich nach dem Lokalbesuch hochgeladen werden. Ein wichtiges Merkmal dabei sind die Geopositionsdaten der Aufnahme, die bestätigen, dass der Ersteller des Videos tatsächlich in dem bewerteten Lokal war. Manipulationen von Bewertungen und das Posten "gefälschter" Berichte werden dadurch erheblich erschwert.

Reiseberichte und Bewertungsvideos bilden eine Schnittmenge zwischen den professionellen Videos und dem großen Feld der Privatvideos die mit dem erfindungsgemäßen Verfahren vorteilhaft erstellt, bearbeitet, verwendet und archiviert werden können. Einer Smartphone-Anwendung, die das erfindungsgemäße Verfahren umsetzt, kann nämlich auch als einfache Kameraanwendung verwendet werden, die gestartet wird, indem der Benutzer in dem in Fig. 2 dargestellten Startbildschirm die Überkategorie "FUN" auswählt, um in den Modus für die Erstellung eines Privatvideos zu gelangen ("FUN-Modus"). Der Ablauf entspricht dabei im Wesentlichen dem oben unter Bezugnahme auf Fig. 1 beschriebenen Verfahren, lediglich mit dem Unterschied, dass die Videoschablone eine variable Anzahl von Szenen beinhaltet, und die Szenen eine beliebige Länge haben können.

Nach dem Auswählen von FUN gelangt der Benutzer direkt zur Schirmansicht der Fig. 4 und kann durch Auswählen des "ACTION"-Steuerfelds 404 gleich mit der Aufnahme beginnen, oder zuvor die in der Filmklappe angezeigten Daten anpassen.

Jede Aufnahme wird als eigene Szene gespeichert und nummeriert, wobei die Aufnahme in der selben Weise mit Pause-Modus und Aufzeichnungs-Modus ausgeführt werden kann, wie dies oben beschrieben ist. Auch im FUN-Modus können Videodaten eingegeben werden, beispielsweise eine Beschreibung oder eine Liste der in dem Video auftretenden Personen. Über die Szenengalerie 801 kann auf die Szenenauswahl-Schirmansicht 901 zugegriffen werden, wobei es in diesem Modus auch möglich ist, die einzelnen Szenen umzuorden, oder einzelne Szenen zu löschen. Weiter kann im Effekte-Menü 1001 ein zusätzlicher Menüpunkt zum Beschneiden der Szene vorgesehen sein, wobei dies in einfacher Weise mit einem Zeitschieber erfolgen kann, bei dem Schieberelemente für den Beginn und das Ende vorgesehen sind. Vorzugsweise wird der von der Szene geschnittene Teil nicht gelöscht, sondern er wird lediglich für die Gesamtzusammenstellung des Videos nicht berücksichtigt. Dadurch können Schneidevorgänge einfach wieder rückgängig gemacht werden. Mit dem Effekte-Menü 1001 können auch alle anderen oben beschriebenen Vorgänge durchgeführt werden.

Gegebenenfalls kann eine Szene auch in zwei unabhängige Szenen aufgeteilt werden, etwa um einen Teile der Aufnahme umzusortieren, oder um Teile in der Mitte einer Szene herauszuschneiden.

Im Menü 1101 für das Einfügen von Emotimoves kann weiters eine Schaltfläche vorgesehen sein, mit der man, gegebenenfalls gegen eine Gebühr, weitere Emotimoves zur Verwendung herunterladen bzw. freischalten kann. Insbesondere für den FUN-Modus ist es auch während der Aufnahme, also im Aufzeichnungs-Modus, möglich, das Menü für Emotimoves durch eine Gestensteuerung "auszuklappen", um direkt währen der Aufnahme Emotimoves hinzufügen zu können (etwa durch Auswählen der Effekte-Schaltfläche 608 in der Aufzeichnungs-Schirmansicht 601). Um die Handhabung während der Aufnahme zu erleichtern, kann das Emotimoves-Menü im Aufzeichnungsmodus gegenüber dem Szenenbearbeitungsmodus vereinfacht sein und nur eine (gegebenenfalls wählbar) eingeschränkte Auswahl an Emotimoves bereitstellen. Auch andere Menüpunkte aus dem Effekte-Menü können gegebenenfalls auch während der Aufnahme verfügbar sein.

Auch im FUN-Modus können die erstellten und fertig bearbeiteten Videos am Ende automatisiert auf eine Internetplattform geladen werden, wobei hier insbesondere Social-Media-Plattformen in Frage kommen. Beispielsweise kann das bearbeitete und fertiggestellte Video mit einem Klick auf Facebook gepostet werden, wobei als Text die in den Videodaten hinterlegt Beschreibung verwendet werden kann. Das Video kann entweder direkt auf der Plattform von Facebook gespeichert werden, bevorzugter Weise besteht jedoch ein eigener Cloudserver, der ausschließlich der Speicherung der mit der Smartphone-App erzeugen Videos dient. Diese Videos können dann auf anderen Plattformen durch Verlinkung eingebunden werden. Diese Möglichkeit steht nicht nur im FUN-Modus offen, sondern kann auch für alle anderen Videos vorgesehen sein.

Eine weitere Funktion im FUN-Modus bietet die Möglichkeit, Videos an Freunde (oder eine Liste von Freunden) zu verschicken. Dabei kann das Video entweder als Emailanhang versendet werden, oder, wenn der Empfänger die selbe Anwendung nutzt, kann dieses Video (oder der entsprechende Link) als Videonachricht direkt an die entsprechende App des Smartphones des Empfängers geschickt werden, wobei der Empfänger auch über eine Push-Funktion über den Eingang des Videos benachrichtigt werden kann. Dies erlaubt eine Videokommunikation in der Art eines SMS-Dienstes, wobei anstelle der Textnachricht einfach ein Video gesendet wird ("Video-Messaging"). Die in die Videos eingebundenen Emotimoves können als Analogie zu den beliebten Emoticons in Textnachrichten angesehen werden.

In der in Fig. 14 dargestellten Hauptmenü-Schirmansicht 1401 kann ein Nachrichten-Icon 1407 vorgesehen sein, das die Anzahl der noch nicht betrachteten Videonachrichten anzeigt. Durch Auswählen eines Aktualisierungs-Icons 1408 kann geprüft werden, ob neue Videonachrichten am Server vorhanden sind. Beim Abrufen von empfangenen Videos, die auf den Cloudserver gespeichert sind, kann vom Serverbetreiber eine Werbeeinschaltung, zum Beispiel ein dem eigentlichen Video vorgelagerte Werbevideo oder eine Werbeeinblendung gesendet werden.

Sowohl im FUN-Modus, als auch in anderen Betriebsmodi können bestimmte Effekte und Graphikelemente in Abhängigkeit von der Geoposition und/oder dem Zeitpunkt der Aufnahme freigegeben und angeboten werden. Beispielsweise kann bei einer Sportveranstaltung in einem Stadion ein Fanrahmen mit dem Logo eines Vereins für alle Nutzer bereitgestellt werden, die sich zum Zeitpunkt der Sportveranstaltung in dem Stadion befinden. Auch andere Graphikelement können auf Basis der Zeit- und/oder Geopositionsdaten angeboten werden, beispielsweise können Emotimoves, die sich spezifisch auf eine Sportart, beispielsweise ein Tennismatch, beziehen, nur im Rahmen eines bestimmten Tennisturniers angeboten werden, sodass nur die Zuseher vor Ort dieses Emotimoves verwenden können. Diese Möglichkeit lässt sich auch für zahlreiche andere Ereignisse auch abseits von Sportveranstaltungen nutzen, beispielsweise für Konzert- und Festivalveranstaltungen, aber auch im Businessbereich, etwa für Firmenevents oder Messeveranstaltungen.

Effekte und Graphikelemente können auch gegen eine Gebühr angeboten werden, etwa als Merchandisingprodukt, mit dem Fans beispielsweise ihre Zugehörigkeit zu einem bestimmten Verein oder Sportler zeigen und diesen unterstützen können. Dieses Merkmal lässt sich auch im Charitybereich nutzen, indem durch das Zeigen eines bestimmten Logos oder Graphikelements in Videos nicht nur die moralische, sondern auch die finanzielle Unterstützung eines Projektes durch den Filmenden offen zur Schau gestellt werden kann.

Die oben beschriebenen Verfahren zur Herstellung von Videoaufnahmen erlauben weiters eine besonders einfache, automatisierte und übersichtliche Verwaltung der Videoaufnahmen, da allen Szenen und fertigen Videos automatisch ein Aufnahmedatum, eine Aufnahmezeit, ein Titel, Geopositionsdaten, ein Rechteinhaber und ein spezifisches mobiles Gerät, mit dem die Aufnahme gemacht wurde, zugeordnet sind. Als Rechteinhaber wird üblicherweise der Inhaber des mobilen Gerätes angesehen, mit dem das Video erstellt wurde. Alle diese Daten werden automatisch vorgegeben und können (mit Ausnahme der Geoposition und des Datums/der Zeit) auf einfache Weise geändert werden.

Auf Basis dieser Videodaten können die Videos sowohl im Speicher des mobilen Gerätes, als auch im Speicher des Cloudservers übersichtlich präsentiert und verwaltet werden. Über den Cloudserver ist es weiters möglich, Freigaben für die Videos zu erstellen, und diese je nach Wunsch mit ausgewählten Freunden, Freundeslisten oder der Allgemeinheit zu teilen.

Unter den Videodaten kann auch eine maximale Nutzungsdauer eingegeben werden, wobei das Video nach Ablauf der Nutzungsdauer nicht mehr für Dritte verfügbar ist. Videodateien, die von dem Cloudserver auf Geräte von Dritten gespeichert wurden, werden nach Ablauf der maximalen Nutzungsdauer von der Anwendung automatisch gelöscht. Gegebenenfalls wird auch das auf dem Cloudserver gespeicherte Video und/oder das auf dem mobilen Gerät des Benutzers gespeicherte Video gelöscht, wenn diese der Benutzer wünscht. Die maximale Nutzungsdauer kann als Zeit- und Datumsangabe definiert sein, oder als maximale Anzahl an Abspielvorgängen. Die Funktion der automatischen Deaktivierung bzw. des automatischen Löschens des Videos ist insbesondere beim Video-Messaging vorteilhaft, wenn nicht gewünscht ist, dass Kommunikationsvideos langfristig gespeichert bleiben.

## Patentansprüche

1. Verfahren zur Herstellung von Videoaufnahmen mit einem mobilen Kameragerät, wobei das Verfahren die folgenden Schritte aufweist:
a) Bereitstellen (101) von Videoschablonen, wobei jede Videoschablone eine Vielzahl an vorgegebenen Szenen aufweist;
b) Benutzerauswahl (102) einer Videoschablone;
c) Anzeigen (103) und gegebenenfalls Bearbeiten von Video- und/oder Szeneninformationen;
d) Empfangen (104) einer Benutzereingabe zum Starten der Aufnahme der vorgegebenen Szene;
e) Aufnahme (105) der aktuell vorgegebenen Szene;
f) Prüfen (106, 107) der aufgenommenen Szene und entweder
- Wiederholen (109) der Aufnahme der letzten Szene oder
- Speichern (108) der letzten Szene und Beginn (110) der Aufnahme der nächsten Szene,
bis alle vorgegebenen Szenen fertiggestellt sind (111);
g) gegebenenfalls Einfügen und/oder Bearbeiten (112) von Videodaten;
h) gegebenenfalls Bearbeiten (113) der Szenen; und
i) Zusammenfügen (114) der aufgenommenen Szenen gemäß der gewählten Videoschablone zu einem Video und Speichern des Videos;
**dadurch gekennzeichnet, dass** das mobile Kameragerät Positions- und gegebenenfalls Bewegungsdaten ermittelt und diese mit der Szene speichert und für die Schritte der Aufnahme (105) und/oder Bearbeitung (112) der Szenen verwendet, wobei das Bearbeiten (113) und/oder das Aufnehmen (105) das Einfügen von animierten und/oder statischen Graphikelementen umfasst, und wobei die Graphikelemente auf Basis der Positionsdaten und gegebenenfalls dem Zeitpunkt der Aufnahme der aufgenommenen Szene zur Auswahl bereitgestellt werden.

2. Verfahren nach Anspruch 1, **dadurch gekennzeichnet, dass** vor und/oder während der Aufnahme (105) Hinweise und Anzeigen eingeblendet werden, die anhand der Positions- und/oder von Bewegungsdaten erstellt werden.

3. Verfahren nach Anspruch 1 oder 2, **dadurch gekennzeichnet, dass** die gespeicherten Positions- und gegebenenfalls Bewegungsdaten mit dem Video verfügbar gemacht werden.

4. Verfahren nach einem der Ansprüche 1 bis 3, **dadurch gekennzeichnet, dass** die Videoschablone Videodaten für eine Produktpräsentation und/oder ein Produktinserat umfasst.

5. Verfahren nach einem der Ansprüche 1 bis 4, **dadurch gekennzeichnet, dass** das Verfahren einen Schritt zum Upload des Videos zu einem Cloudserver oder einer Internetplattform umfasst.

6. Verfahren nach Anspruch 5, **dadurch gekennzeichnet, dass** auf der Internetplattform nach dem Upload eine automatische Veröffentlichung des Videos auf Basis der Videodaten und gegebenenfalls der Positions- und/oder Bewegungsdaten erfolgt.

7. Verfahren nach einem der Ansprüche 5 oder 6, **dadurch gekennzeichnet, dass** eine Auswahl der für einen Upload verfügbaren Internetplattformen in Abhängigkeit von der Videoschablone und/oder von den Positionsdaten bereitgestellt wird.

8. Verfahren nach einem der Ansprüche 1 bis 7, **dadurch gekennzeichnet, dass** die Graphikelemente auf Basis der Positionsdaten und der Datums-/Zeitdaten der aufgenommenen Szene zur Auswahl bereitgestellt werden.

9. Verfahren nach einem der Ansprüche 1 bis 8, **dadurch gekennzeichnet, dass** während und/oder nach der Aufnahme (105) jeder Szene eine Qualitätsprüfung (106, 107) auf Basis von Qualitätskriterien erfolgt.

10. Verfahren nach einem der Ansprüche 1 bis 9, **dadurch gekennzeichnet, dass** die Videodaten eine maximale Nutzungsdauer umfassen, nach deren Ablauf das Video zumindest für Dritte deaktiviert und/oder gelöscht wird.

11. Verfahren nach einem der Ansprüche 1 bis 10, **dadurch gekennzeichnet, dass** die Aufnahme einer Szene das Mitschneiden von (Gaming-)Inhalten, die auf dem mobilen Gerät angezeigt werden, umfasst.

12. Verfahren nach einem der Ansprüche 1 bis 11, **dadurch gekennzeichnet, dass** eine zusätzliche Kamera des mobilen Geräts bei der Aufnahme aktivierbar ist, wobei die Aufnahme der zweiten Kamera in Form eines Bild-in-Bild-Modus in die aufgenommene Szene eingeblendet wird.

13. Verfahren zur Herstellung und Veröffentlichung eines Videos in einem Internetportal, wobei das Video gemäß einem Verfahren nach einem der Ansprüche 1 bis 12 hergestellt wird, wobei das Video von dem mobilen Kameragerät zum Internetportal hochgeladen wird, und wobei die Veröffentlichung auf Basis der Videodaten erfolgt.

14. Verwendung eines Videos, das gemäß einem Verfahren nach einem der Ansprüche 1 bis 12 hergestellt wurde, zur Kommunikation zwischen dem Benutzer des mobilen Kamerageräts und zumindest einem weiteren Benutzer eines weiteren mobilen Kamerageräts.

## Claims

1. Method for producing video recordings using a mobile camera device, the method comprising the following steps:
a) provision (101) of video templates, each video template having a large number of specified scenes;
b) user selection (102) of a video template;
c) display (103) and optional editing of video and/or scene information;
d) receipt (104) of a user input to start the recording of the specified scene;
e) recording (105) of the currently specified scene;
f) checking (106, 107) of the recorded scene and either
- repetition (109) of the recording of the last scene or
- storage (108) of the last scene and beginning (110) of the recording of the next scene,
until all the specified scenes are completed (111);
g) optional insertion and/or editing (112) of video data;
h) optional editing (113) of the scenes; and
i) combination (114) of the recorded scenes according to the selected video template to make a video, and storage of the video;
**characterized in that** the mobile camera device determines position and optionally movement data and stores same with the scene and uses same for the steps of recording (105) and/or editing (112) the scenes, the editing (113) and/or recording (105) including the insertion of animated and/or static graphic elements, and the graphic elements being made available for selection on the basis of the position data and optionally the time of the recording of the recorded scene.

2. Method according to claim 1, **characterized in that** before and/or during the recording (105), information and displays are superimposed which are created on the basis of the position and/or movement data.

3. Method according to either claim 1 or claim 2, **characterized in that** the stored position and optional movement data are made available with the video.

4. Method according to any of claims 1 to 3, **characterized in that** the video template comprises video data for a product presentation and/or a product advertisement.

5. Method according to any of claims 1 to 4, **characterized in that** the method comprises a step for uploading the video to a cloud server or an Internet platform.

6. Method according to claim 5, **characterized in that** the video is automatically published on the Internet platform, after the upload, on the basis of the video data and optionally the position and/or movement data.

7. Method according to either claim 5 or claim 6, **characterized in that** a selection of the Internet platforms available for an upload is provided on the basis of the video template and/or the position data.

8. Method according to any of claims 1 to 7, **characterized in that** the graphic elements are made available for selection on the basis of the position data and the date/time data of the recorded scene.

9. Method according to any of claims 1 to 8, **characterized in that** a quality check (106, 107) is carried out on the basis of quality criteria during and/or after the recording (105) of each scene.

10. Method according to any of claims 1 to 9, **characterized in that** the video data comprise a maximum use duration, after which the video is deactivated and/or deleted at least for third parties.

11. Method according to any of claims 1 to 10, **characterized in that** the recording of a scene comprises the recording of (gaming) content which is displayed on the mobile device.

12. Method according to any of claims 1 to 11, **characterized in that** an additional camera of the mobile device can be activated during the recording, the recording of the second camera being superimposed into the recorded scene in the form of a picture-in-picture mode.

13. Method for producing and publishing a video on an Internet portal, wherein the video is produced according to a method according to any of claims 1 to 12, wherein the video is uploaded from the mobile camera device to the Internet portal, and wherein the publication is carried out on the basis of the video data.

14. Use of a video which has been produced according to a method according to any of claims 1 to 12 for communication between the user of the mobile camera device and at least one further user of a further mobile camera device.

## Revendications

1. Procédé de production d'enregistrements vidéo au moyen d'un appareil photo mobile, le procédé comprenant les étapes suivantes :
a) mise à disposition (101) de modèles vidéo, chaque modèle vidéo comprenant une pluralité de scènes prédéfinies ;
b) sélection (102) par l'utilisateur d'un modèle vidéo ;
c) affichage (103) et éventuellement traitement d'informations vidéo et/ou de scène ;
d) réception (104) d'une entrée utilisateur afin de démarrer l'enregistrement de la scène prédéfinie ;
e) enregistrement (105) de la scène actuellement prédéfinie ;
f) contrôle (106, 107) de la scène enregistrée, et soit
- répétition (109) de l'enregistrement de la dernière scène soit
- stockage (108) de la dernière scène et début (110) de l'enregistrement de la scène suivante,
jusqu'à la finalisation (111) de toutes les scènes prédéfinies ;
g) insertion et/ou traitement (112) éventuels de données vidéo ;
h) traitement (113) éventuel des scènes ; et
i) assemblage (114) des scènes enregistrées en une vidéo selon le modèle vidéo sélectionné, et stockage de la vidéo ;
**caractérisé en ce que** l'appareil photo mobile détermine les données de position et éventuellement de mouvement, les stocke avec la scène et les utilise pour les étapes d'enregistrement (105) et/ou de traitement (112) des scènes, le traitement (113) et/ou l'enregistrement (105) comportant l'insertion d'éléments graphiques animés et/ou statiques, et les éléments graphiques étant mis à disposition pour la sélection sur la base des données de position et éventuellement de l'heure d'enregistrement de la scène enregistrée.

2. Procédé selon la revendication 1, **caractérisé en ce que**, avant et/ou pendant l'enregistrement (105) des instructions et des indications sont affichées, lesquelles sont produites au moyen des données de position et/ou de mouvement.

3. Procédé selon la revendication 1 ou 2, **caractérisé en ce que** les données de position et éventuellement de mouvement stockées sont rendues disponibles avec la vidéo.

4. Procédé selon l'une des revendications 1 à 3, **caractérisé en ce que** le modèle vidéo comporte des données vidéo pour une présentation de produit et/ou une publicité de produit.

5. Procédé selon l'une des revendications 1 à 4, **caractérisé en ce que** le procédé comporte une étape de téléchargement de la vidéo sur un serveur Cloud ou une plateforme Internet.

6. Procédé selon la revendication 5, **caractérisé en ce que** la publication automatique de la vidéo est effectuée après le téléchargement sur la plateforme Internet, sur la base des données vidéo et éventuellement des données de position et/ou de mouvement.

7. Procédé selon l'une des revendications 5 ou 6, **caractérisé en ce qu'**une sélection des plateformes Internet disponibles pour un téléchargement est mise à disposition en fonction du modèle vidéo et/ou des données de position.

8. Procédé selon l'une des revendications 1 à 7, **caractérisé en ce que** les éléments graphiques sont mis à disposition pour la sélection sur la base des données de position et des données de date/d'heure de la scène enregistrée.

9. Procédé selon l'une des revendications 1 à 8, **caractérisé en ce qu'**un contrôle de qualité (106, 107) est effectué, sur la base de critères de qualité, pendant et/ou après l'enregistrement (105) de chaque scène.

10. Procédé selon l'une des revendications 1 à 9, **caractérisé en ce que** les données vidéo comportent une période d'utilisation maximale après laquelle la vidéo est désactivée et/ou supprimée, au moins pour des tiers.

11. Procédé selon l'une des revendications 1 à 10, **caractérisé en ce que** l'enregistrement d'une scène comporte l'enregistrement de contenus (de jeux) qui sont affichés sur l'appareil mobile.

12. Procédé selon l'une des revendications 1 à 11, **caractérisé en ce qu'**un appareil photo supplémentaire de l'appareil mobile peut être activé pendant l'enregistrement, l'enregistrement du second appareil photo étant affiché dans la scène enregistrée sous la forme d'un mode image dans l'image.

13. Procédé de production et de publication d'une vidéo sur un portail Internet, la vidéo étant produite conformément à un procédé selon l'une des revendications 1 à 12, la vidéo étant téléchargée depuis l'appareil photo mobile sur le portail Internet, et la publication étant effectuée sur la base des données vidéo.

14. Utilisation d'une vidéo produite conformément à un procédé selon l'une des revendications 1 à 12, destinée à la communication entre l'utilisateur de l'appareil photo mobile et au moins un autre utilisateur d'un autre appareil photo mobile.
